(19) Europäisches Patentamt
European Patent Office
Office européen des brevets

(11) EP 2 239 134 B1

(12) EUROPEAN PATENT SPECIFICATION

(45) Date of publication and mention of the grant of the patent:
**13.05.2020 Bulletin 2020/20**

(21) Application number: **09705178.3**

(22) Date of filing: **27.01.2009**

(51) Int Cl.:
***C08J 7/04*** *(2020.01)* ***B32B 9/04*** *(2006.01)*

(86) International application number:
**PCT/JP2009/051266**

(87) International publication number:
**WO 2009/096390 (06.08.2009 Gazette 2009/32)**

(54) **GAS BARRIER FILM HAVING EXCELLENT WEATHER RESISTANCE**

GASSPERRFOLIE MIT HERVORRAGENDER WETTERFESTIGKEIT

FILM BARRIÈRE AUX GAZ AYANT UNE EXCELLENTE RÉSISTANCE AUX INTEMPÉRIES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.01.2008 JP 2008020221**
**31.01.2008 JP 2008020242**
**31.01.2008 JP 2008020220**

(43) Date of publication of application:
**13.10.2010 Bulletin 2010/41**

(73) Proprietor: **Mitsubishi Chemical Corporation**
**Chiyoda-ku,**
**Tokyo 100-8251 (JP)**

(72) Inventors:
- **OKAWARA, Chiharu**
**Chiyoda-ku**
**Tokyo100-8251 (JP)**
- **YOSHIDA, Shigenobu**
**Chiyoda-ku**
**Tokyo 100-8251 (JP)**
- **HACHISUKA, Tooru**
**Chiyoda-ku,**
**Tokyo 100-8251 (JP)**

(74) Representative: **Gille Hrabal**
**Brucknerstrasse 20**
**40593 Düsseldorf (DE)**

(56) References cited:
**EP-A2- 0 709 442**
**WO-A1-2007/040039**
**JP-A- 63 132 980**
**JP-A- 2002 331 619**
**JP-A- 2003 277 675**
**JP-A- 2006 255 928**
**JP-A- 2007 030 341**
**JP-A- 2007 331 187**

- **DATABASE WPI Week 200624 Thomson Scientific, London, GB; AN 2006-225118 XP002637668, & JP 2006 068992 A (KONICA CORP) 16 March 2006 (2006-03-16)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 239 134 B1

## Description

[Technical Field]

The present invention relates to a gas barrier film, especially to a gas barrier film having excellent weather resistance.

[Background Art]

Hitherto, gas barrier films composed of a plastic film as the substrate thereof and, as formed on the surface of the plastic film, an inorganic thin film which is made of silicon oxide, aluminum oxide, magnesium oxide or the like have been extensively used in packaging applications in which products to be packaged are required to be shielded from various gases such as water vapor and oxygen, for example, for packaging foods, industrial products, medicines or drugs or the like to prevent deterioration thereof. Apart from such packaging applications, other new applications have been specifically noted these days for those gas barrier films, for example, as substrate films or vacuum insulation materials for organic devices such as liquid-crystal display devices, solar cells, electromagnetic wave shields, touch panels, organic electroluminescent (EL) devices, organic thin film transistor (TFT), organic semiconductor sensors, organic light-emitting devices and the like, as well as for electronic papers, film capacitors, inorganic EL devices, or color filters. In these applications, gas barrier films are required to have more severely controlled performance, and for example, the films must keep the gas barrier property thereof even in a high-temperature high-humidity environment and in a UV radiation environment. Especially for films for solar cells for outdoor use, required are gas barrier films excellent in weather resistance with little deterioration of properties by UV rays.

In such a gas barrier film having an inorganic thin layer, the substrate film is surface-treated for the purpose of preventing the inorganic thin layer from being delaminated and peeled away from the substrate film and preventing the degradation of the gas barrier property of the film, by which the adhesiveness of the inorganic thin layer to the substrate film is enhanced. Examples of the surface treatment include corona treatment, plasma treatment, and coating treatment. Above all, coating treatment is useful as being effective for enhancing the adhesiveness of the inorganic thin film layer and for preventing bleeding out from the substrate film. However, in the gas barrier film produced by coat-treating the substrate film followed by forming an inorganic thin film layer thereon, the coating layer involves the weakest aspect in point of the weather resistance thereof, as described below.

Regarding the coating treatment for the substrate film of a gas barrier film, heretofore disclosed are a coating of a crosslinked product of a polyester and an isocyanate, an anchor coating that contains a chlorine-containing resin, and a coating layer of a UV cutoff agent. However, the coating of a crosslinked product of a polyester and an isocyanate is unsuitable since the ester group is hydrolyzed in a high-temperature high-humidity environment and the intrinsically necessary adhesiveness thereof greatly lowers and consequently the gas barrier property lowers. The anchor coating that contains a chlorine-containing resin is unfavorable in view of the environmental load thereof, and in addition, when a saturated polyester is not incorporated therein, the gas barrier property may be insufficient, and the saturated polyester has a problem in that it is hydrolyzed in a high-temperature high-humidity environment.

There are known a method of providing a coating layer that contains a water-base polyurethane resin on the substrate film (Patent Document 1), and a method of forming a polyvinyl butyral resin coating film on a substrate film (Patent Document 2); however, these are problematic in that the gas barrier property tends to lower in a high-temperature high-humidity environment.

As opposed to these, disclosed is a laminate film produced by copolymerization of a benzotriazole-base reactive UV absorbent and an acrylic monomer on a polyester surface for the purpose of improving the weather resistance thereof (Patent Document 3); however, this is not a case that has the above-mentioned inorganic thin film. A method of using a UV-cutoff agent in a coating layer (Patent Document 4) may be taken into consideration; but in this case, release and migration of the UV-cutoff agent is easy to consider.

Further disclosed are an acrylic resin (Patent Document 5) and a mixed resin of a polyester resin and an acrylic resin (Patent Document 6) as an anchor coat layer and a primer layer for a moisture-proof film and a barrier film for the back cover material for solar cells; and a crosslinked product of an acrylic resin and a melamine compound as the undercoat layer for enhancing the adhesiveness between a barrier layer and a polyethylene naphthalate film for a substrate film for photoelectronic devices (Patent Document 7). However, these also have some problems in that they are degraded through irradiation with UV rays and tend to be hydrolyzed in a high-temperature high-humidity environment and therefore they could not keep a high gas barrier property. Also disclosed is a packaging material for electronic component cases, in which an acrylic polymer layer is provided between an aluminium foil layer and a non-oriented thermoplastic resin film layer (Patent Document 8); in this, however, the polymer layer serves as an adhesive, not participating in improving weather resistance.

Patent Document 9 discloses a weather-resistant material corresponding to that of present claim 1.

Patent Document 10 discloses specific weather-resistant materials.

Patent Document 11 discloses a backing sheet for a solar cell including a transparent film substrate, a primer layer comprising an organic polymer obtained from a reaction between a polyol such as polyvinyl acetal and an isocyanate compound, and a vapor-deposited thin film layer comprising a silicon oxide or the like. A modifying treatment on the polyvinyl acetal is not mentioned in this document.

Patent Document 12 discloses a laminate configured from a base film a coating layer comprising a gas-barrier coating composition including an alkoxysilane-modified polyvinylalcohol resin, and an inorganic vapor-deposited layer, and the fact that a modifying treatment can enhance adhesiveness of an underlying substrate. The document does not disclose combining and crosslinking an isocyanate compound with a coating layer.

Patent Document 13 discloses the feature of combining and crosslinking/curing a blocked polyisocyanate with a polyvinyl alcohol to increase weather resistance.

Patent Document 14 discloses an encapsulation film for a photovoltaic module, comprising a polyester film layer and a layer composed of at least one substance selected from the group consisting of metals, metal oxides and inorganic compounds. A resin layer is laminated upon at least one side of the encapsulation film. That is, the inorganic thin film is provided on the substrate. No other order of layers is disclosed in this document.

Patent Document 15 discloses coated formed polycarbonate articles having a coating which provides protection against irradiation with UV, and optionally a coating for preventing drop formation.

Patent Document 16 discloses a gas barrier film having a gas barrier layer having an inorganic compound or metal and a stress-relaxation layer having an inorganic compound, organic polymer or inorganic polymer, on a base material.

[Patent Document 1] JP-A 2007-30341
[Patent Document 2] JP-A 2001-310412
[Patent Document 3] JP-A 10-329291
[Patent Document 4] JP-A 10-100331
[Patent Document 5] JP-A 2002-26343
[Patent Document 6] JP-A 2005-144719
[Patent Document 7] JP-T 2005-521193
[Patent Document 8] JP-A 2002-187233
[Patent Document 9] JP-A 2002-331619
[Patent Document 10] JP-A 2006-255928
[Patent Document 11] JP-A 2007-331187
[Patent Document 12] JP-A 2003-277675
[Patent Document 13] JP-A 63-132980
[Patent Document 14] WO 2007/040039 corresponding to EP-A 1 930 953
[Patent Document 15] EP-A 0 709 442
[Patent Document 16] JP-A 2006-068992


[Disclosure of the Invention]

[Problems to be Solved by the Invention]

The present invention relates to a weather-resistant gas barrier film capable of keeping a high delamination strength and an excellent gas barrier property in a high-temperature high-humidity environment or in a UV radiation environment.

[Means for Solving the Problems]

Specifically, the present invention relates to:

[1] a gas barrier film comprising a substrate film, a weather-resistant coating layer formed on at least one surface thereof, and an inorganic thin film layer formed on the surface of the coating layer,
in which the weather-resistant coating layer is selected from:

(1) a weather-resistant coating layer formed by crosslinking an acrylic copolymer having a UV-absorbing group, a cycloalkyl group and a crosslinking functional group, with a crosslinking compound,
(2) a weather-resistant coating layer formed by crosslinking a polycaprolactone-polyol and/or a polycarbonate-polyol having a terminal hydroxyl index of from 92.5 to 98.5 with an isocyanate compound and/or an epoxy compound, the terminal hydroxyl index being the ratio (%) of the peak area of polyol to the sum total of the peak area of monoalcohol and polyol as analyzed by gas chromatography, which is performed by heating from 40 °C up to 220°C at 10°C/min, keeping as such for 15 minutes, and analyzing with a hydrogen flame ionization detector,

(3)a weather-resistant coating layer formed by crosslinking polyvinyl butyral having a degree of butyralization of from 50 to 80 mol% and an isotactic triad-type residual hydroxyl group content of at most 1 mol% and/or polyvinyl acetal having a degree of acetalization of from 50 to 80 mol% with an isocyanate compound and/or an epoxy compound.

[Effect of the Invention]

According to the present invention, there is obtained a weather-resistant gas barrier film capable of keeping a high delamination strength and an excellent gas barrier property in a high-temperature high-humidity environment or in a UV radiation environment.

[Best Mode for Carrying out the Invention]

The present invention is described in detail hereinunder.

[Substrate Film]

As the substrate film for the gas barrier film of the present invention, preferred is a thermoplastic polymer film; and as its material, any resin usable for ordinary packaging materials can be used with no limitation. Concretely, there are mentioned polyolefins such as homopolymers or copolymers of ethylene, propylene, or butene, and amorphous polyolefins such as cyclic polyolefins; as well as polyesters such as polyethylene terephthalate polyethylene 2,6-naphthalate; polyamides such as nylon 6, nylon 66, nylon 12, copolymer nylon; partial hydrolyzates of ethylene-vinyl acetate copolymers (EVOH), polyimides, polyether imides, polysulfones, polyether sulfones, polyether-ether ketones, polycarbonates, polyvinyl butyrals, polyarylates, fluororesins, acrylate resins, or biodegradable resins. Of those, preferred are polyesters, polyamides and polyolefins from the viewpoint of the physical properties of the film and the cost thereof. Above all, more preferred are polyethylene terephthalate and polyethylene naphthalate from the viewpoint of the physical properties of the film.

The substrate film may contain any known additives, for example, an antistatic agent, a ray-cutoff agent, a UV absorbent, a plasticizer, a lubricant, a filler, a colorant, a stabilizer, a lubricating agent, a crosslinking agent, an antiblocking agent, an antioxidant.

The thermoplastic polymer film for the substrate film is formed by the use of the above-mentioned starting material. In case where the film is used as the substrate, it may be non-oriented or oriented. If desired, it may be laminated with any other plastic substrate.

The substrate film may be produced in a conventional known method. For example, a starting resin is melted in an extruder, extruded out through a ring die or a T-die, and then rapidly cooled to give a non-oriented film that is substantially amorphous with no orientation. A multilayer die may be used; and a single-layer film of one resin, a multilayer film of one resin, or a multilayer film of plural resins may be produced.

The non-oriented film may be oriented in the film flow (longitudinal) direction or in a (lateral) direction vertical to the film flow direction, according to a known method of monoaxial orientation, tenter-type successive biaxial orientation, tenter-type simultaneous biaxial orientation, or tubular simultaneous biaxial orientation, to thereby produce a film oriented at least in one axial direction. The draw ratio in orientation may be set in any desired manner, but is preferably so designed that the 150°C thermal shrinkage could be from 0.01 to 5%, more preferably from 0.01 to 2%.

Above all, preferred are a biaxially-oriented polyethylene naphthalate film, and a coextruded biaxially-oriented film of polyethylene terephthalate and/or polyethylene naphthalate and any other plastic, from the viewpoint of the film physical properties.

The thickness of the substrate film may be selected generally within a range of from 5 to 500 μm, preferably from 10 to 200 μm in accordance with the use thereof, from the viewpoint of the mechanical strength, the flexibility and the transparency of the substrate for the gas barrier laminate film of the present invention; and the substrate film includes a thick sheet-like film. The width and the length of the film are not specifically defined, and may be suitably selected in accordance with the use thereof.

For improving the applicability and the adhesiveness of an anchor coating agent to the substrate film, the film may be surface-treated by any ordinary chemical treatment, or discharge treatment prior to application of an anchor coating agent thereto.

[Weather-Resistant Coating Layer]

In the gas barrier film of the present invention, a weather-resistant coating layer is used.

In general, in plastics, hydrogen is drawn out from the polymer chain by heat, water, light, or oxygen, thereby giving a radical. The generated radical bonds to oxygen to form a peroxide radical having high reactivity, and this draws out the hydrogen from another polymer chain thereby to again generate a radical and simultaneously forms a hydroxy peroxide group. The hydroxy peroxide group decomposes into a hydroxy radical and an oxide radical, and these draw out the hydrogen from still another polymer chain to again generate a radical. Through this process, plastics degrade.

Accordingly, for preventing the degradation of plastics, the radical generation by heat, water, or light must be inhibited, or the degradation step must be stopped.

From the above-mentioned viewpoint, the weather-resistant coating layer is selected from (1) a weather-resistant coating layer formed by crosslinking an acrylic copolymer having a UV-absorbing group, a cycloalkyl group and a crosslinking functional group, (2) a weather-resistant coating layer formed by crosslinking a polycaprolactone-polyol and/or a polycarbonate-polyol as defined in claim 1 with an isocyanate compound and/or an epoxy compound, and (3) a weather-resistant coating layer formed by crosslinking polyvinyl butyral and/or polyvinyl acetal as defined in claim 1 with an isocyanate compound and/or an epoxy compound.

<Acrylic Copolymer>

In the present invention, the above-mentioned acrylic copolymer has a UV-absorbing group, a cycloalkyl group and a crosslinking functional group.

A UV-stabilizing group, which may optionally be present in the acrylic copolymer, acts to capture the generated radical and inactivate it; and from the above-mentioned viewpoint, concretely, a hindered amine group is preferred. Specifically, the stable nitroxy radical generated at the hindered amine group bonds to the active polymer radical, and this is again restored to the original stable nitroxy radical; and the process is repeated.

The UV-absorbing group absorbs radiated UV rays to thereby inhibit radical generation; and from this point, preferred are a benzotriazole group and/or a benzophenone group.

The cycloalkyl group has the action of imparting waterproofness and water vapor permeation resistance to the resin of the acrylic copolymer that constitutes the weather-resistant coating layer.

Accordingly, use of the resin of an acrylic copolymer having at least a UV-absorbing group, a cycloalkyl group and a crosslinking functional group in the coating layer prevents the degradation of the gas barrier property of the gas barrier film. In the present invention, preferably, the coating layer contains all the UV-stabilizing group, the UV-absorbing group and the cycloalkyl group besides the crosslinking functional group to attain the synergistic effect thereof in point of the weather resistance of the film.

The acrylic copolymer may be produced by copolymerization of at least one selected from a group consisting of at least a polymerizing UV-stabilizing monomer (optional component), a polymerizing UV-absorbing monomer, a cycloalkyl (meth)acrylate and a crosslinking functional group-having polymerizing unsaturated monomer.

(Polymerizing UV-Absorbing Monomer)

The polymerizing UV-stabilizing monomer preferably has a hindered amine group, more preferably at least one hindered amine group and at least one polymerizing unsaturated group in the molecule.

The polymerizing UV-stabilizing monomer is preferably a compound of the following formula (1) or (2):

[Chemical Formula 1]

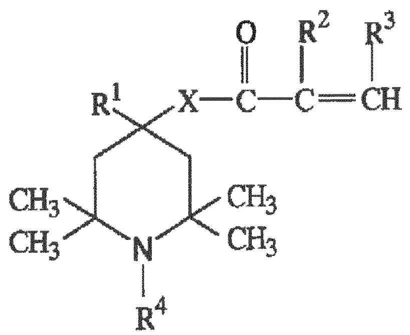

---------(1)

(wherein $R^1$ represents a hydrogen atom or a cyano group; $R^2$ and $R^3$ each independently represent a hydrogen atom or a hydrocarbon group having 1 or 2 carbon atoms; $R^4$ represents a hydrogen atom or a hydrocarbon group having from 1 to 18 carbon atoms; X represents an oxygen atom or an imino group).

[Chemical Formula 2]

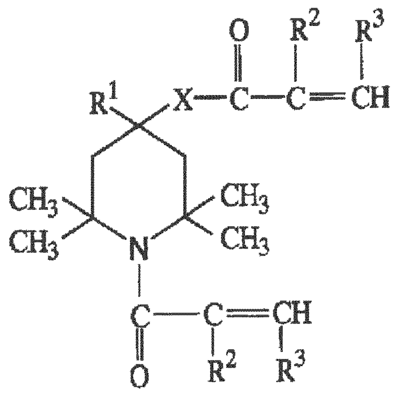

............(2)

(wherein $R^1$ represents a hydrogen atom or a cyano group; $R^2$ and $R^3$ each independently represent a hydrogen atom or a hydrocarbon group having 1 or 2 carbon atoms; X represents an oxygen atom or an imino group).

In the UV-stabilizing monomer represented by the general formula (1) or (2), the hydrocarbon group having from 1 to 18 carbon atoms represented by $R^4$ includes, concretely, a chain hydrocarbon group such as a methyl group, an ethyl group, a propyl group, an isopropyl group, a butyl group, an isobutyl group, a t- butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group; an alicyclic hydrocarbon group such as a cyclopropyl group, a cyclopentyl group, a cyclohexyl group, a cycloheptyl group, a cyclooctyl group; an aromatic hydrocarbon group such as a phenyl group, a tolyl group, a xylyl group, a benzyl group, a phenethyl group. Of those, in the present invention, $R^4$ is preferably a hydrogen atom or a methyl group from the viewpoint of the photostabilization reactivity.

The hydrocarbon group having 1 or 2 carbon atoms for each of $R^2$ and $R^3$ includes, for example, a methyl group, an ethyl group; and preferred is a methyl group.

The UV-stabilizing monomer represented by the above-mentioned general formula (1) concretely includes 4-(meth)acryloyloxy-2,2,6,6-tetramethylpiperidine, 4- (meth)acryloylamino- 2,2,6,6-tetramethylpiperidine, 4-(meth)acryloyloxy-1,2,2,6,6-pentamethylpiperidine, 4-(meth)acryloylamino-1,2,2,6,6-pentamethylpiperidine, 4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine. Of those, preferred from the viewpoint of the photostabilization reaction are 4-(meth)acryloyloxy-2,2,6,6-tetramethylpiperidine, 4-(meth)acryloylamino-2,2,6,6-tetramethylpiperidine, 4-(meth)acryloyloxy-1,2,2,6,6-pentamethylpiperidine, 4-(meth)acryloylamino-1,2,2,6,6-pentamethylpiperidine; and more preferred are 4-(meth)acryloyloxy-2,2,6,6-tetramethylpiperidine, 4-(meth)acryloyloxy-1,2,2,6,6-pentamethylpiperidine. One or more of these may be used here either singly or as suitably mixed. Needless-to-say, the UV-stabilizing monomer of the general formula (1) is not limited to these compounds.

The UV-stabilizing monomer represented by the above-mentioned general formula (2) includes, concretely, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 1-crotonoyl-4-crotonoyloxy-2,2,6,6-tetramethylpiperidine; and of those, in the present invention, preferred from the viewpoint of the starting material versatility are 1-acryloyl-4-acryloylamino-2,2,6,6-tetramethylpiperidine, 1-methacryloyl-4-methacryloylamino-2,2,6,6-tetramethylpiperidine, and more preferred is 1-methacryloyl-4-methacryloylamino-2,2,6,6-tetramethylpiperidine. One or more of these may be used here either singly or as suitably mixed. The UV-stabilizing monomer of the general formula (2) is not limited to these.

Preferably, the above-mentioned polymerizing UV-stabilizing monomer is incorporated in all the polymerizing monomer component for producing the acrylic copolymer, in an amount of from 0.1 to 50% by mass from the viewpoint of the photostabilization capability, more preferably in a range of from 0.2 to 10% by mass, even more preferably from 0.5 to 5% by mass. When the content is within the above-mentioned range, then the copolymer may fully exhibit the weather resistance.

(Polymerizing UV-Absorbing Monomer)

Preferably, the polymerizing UV-absorbing monomer for use in the present invention includes polymerizing benzotriazoles and/or polymerizing benzophenones.

Polymerizing Benzotriazoles

In the present invention, preferably, the polymerizing benzotriazoles are concretely compounds of the following formula (3):

[Chemical Formula 3]

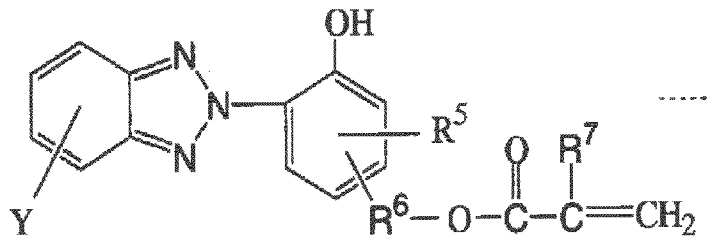

(3)

(wherein $R^5$ represents a hydrogen atom or a hydrocarbon group having from 1 to 8 carbon atoms; $R^6$ represents a lower alkylene group; $R^7$ represents a hydrogen atom or a methyl group; Y represents a hydrogen atom, a halogen atom, a hydrocarbon group having from 1 to 8 carbon atoms, a lower alkoxy group, a cyano group or a nitro group).

[Chemical Formula 4]

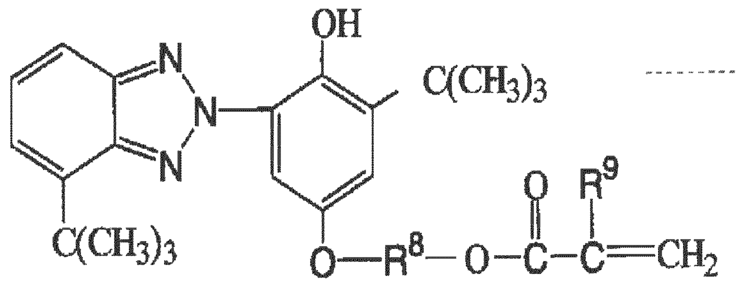

(4)

(wherein $R^8$ represents an alkylene group having 2 or 3 carbon atoms; $R^9$ represents a hydrogen atom or a methyl group).

In the above formula, the hydrocarbon group having from 1 to 8 carbon atoms for $R^5$ includes, concretely, a chain hydrocarbon group such as a methyl group, an ethyl group, a propyl group, an isopropyl group, a butyl group, an isobutyl group, a t-butyl group, a pentyl group, a hexyl group, a heptyl group, an octyl group; an alicyclic hydrocarbon group such as a cyclopropyl group, a cyclopentyl group, a cyclohexyl group, a cycloheptyl group, a cyclooctyl group; an aromatic hydrocarbon group such as a phenyl group, a tolyl group, a xylyl group, a benzyl group, a phenethyl group $R^5$ is preferably a hydrogen atom or a methyl group.

The lower alkylene group for $R^6$ is preferably an alkylene group having from 1 to 6 carbon atoms, concretely including a linear chain alkylene group such as a methylene group, an ethylene group, a propylene group, a butylene group, a pentylene group, a hexylene group; a branched chain alkylene group such as an isopropylene group, an isobutylene group, an s-butylene group, a t-butylene group, an isopentylene group, a neopentylene group; and preferred are a methylene group, an ethylene group, a propylene group.

The substituent for Y includes a hydrogen; a halogen such as fluorine, chlorine, bromine, iodide; a hydrocarbon group having from 1 to 8 carbon atoms as in $R^5$; a lower alkoxy group having from 1 to 8 carbon atoms such as a methoxy group, an ethoxy group, a propoxy group, a butoxy group, a pentoxy group, a heptoxy group; a cyano group; a nitro group. From the viewpoint of the reactivity, preferred are a hydrogen atom, a chlorine atom, a methoxy group, a t-butyl group, a cyano group, a nitro group.

The UV-absorbing monomer represented by the above-mentioned general formula (3) includes concretely 2-[2'-hydroxy-5'-(methacryloyloxymethyl)phenyl]-2H-benzotriazole, 2- [2'-hydroxy-5'-(methacryloyloxyethyl)phenyl]-2H-benzotriazole, 2-[2'-hydroxy-3'-t-butyl-5'-(methacryloyloxyethyl)phenyl]-2H-benzotriazole, 2-[2'-hydroxy-5'-t-butyl-3'-(methacryloyloxyethyl)phenyl]-2H-benzotriazole, 2-[2'-hydroxy-5'-(methacryloyloxyethyl)phenyl]-5-chloro-2H-benzotriazole, 2- [2'-hydroxy-5'-(methacryloyloxyethyl)phenyl] -5-methoxy-2H-benzotriazole, 2-[2'-hydroxy-5'-(methacryloyloxyethyl)phenyl]-5-cyano-2H-benzotriazole, 2-[2'-hydroxy-5'-(methacryloyloxyethyl)phenyl]-t-butyl-2H-benzotriazole, 2-[2'-hydroxy-5'-(methacryloyloxyethyl)phenyl]-5-nitro-2H-benzotriazole. From the viewpoint of the UV absorbability, preferred are 2-[2'-hydroxy-5'-(methacryloyloxymethyl)phenyl] -2H-benzotriazole, 2- [2'-hydroxy-5'-(methacryloyloxyethyl)phenyl]-2H-benzotriazole,2-[2'-hydroxy-3'-t-butyl-5'-(methacryloyloxyethyl)phenyl]-2H-benzotriazole, 2-[2'-hydroxy-5'-(methacryloyloxyethyl)phenyl]-t-butyl-2H-benzotriazole; and more preferred are 2- [2'-hydroxy-5'-(methacryloyloxymethyl)phenyl]-2H-benzotriazole, 2- [2'-hydroxy-5'-(methacryloyloxyethyl)phenyl]-2H-benzotriazole. One or more different types of those UV-absorbing monomers of the general formula (3) may be used here either singly or as suitably mixed.

In the UV-absorbing monomer of the above-mentioned general formula (4), the alkylene group having 2 or 3 carbon atoms for $R^8$ includes concretely an ethylene group, a trimethylene group, a propylene group.

The UV-absorbing monomer of the general formula (4) includes, for example, 2- [2'-hydroxy-5'-(β-methacryloyloxyethoxy)-3'-t-butylphenyl]-4-t-butyl-2H-benzotriazole, 2- [2'-hydroxy-5'-(β-actyloyloxyethoxy)-3'-t-butylphenyl]-4-t-butyl-2H-benzotriazole, 2-[2'-hydroxy-5'-(p-methacryloyloxy-n-propoxy)-3'-t-butylphenyl]-4-t-butyl-2H-benzotriazole, 2-[2'-hydroxy-5'-(β-methacryloyloxy-i-propoxy)-3'-t-butylphenyl]-4-t-butyl-2H-benzotriazole; and from the viewpoint of the UV absorbability, preferred is 2-[2'-hydroxy-5'-(β-methacryloyloxyethoxy)-3'-t-butylphenyl]-4-t-butyl-2H-benzotriazole. One or more different types of those UV-absorbing monomers of the general formula (4) may be used here either singly or as suitably mixed.

Polymerizing Benzophenones

The polymerizing benzophenones usable as the polymerizing UV-absorbing monomer include, for example, monomers of 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, which are produced by reacting 2,4-dihydroxybenzophenone or 2,2',4-trihydroxybenzophenone and glycidyl acrylate or glycidyl methacrylate. From the viewpoint of the starting material versatility, preferred is 2-hydroxy-4-(3-methacryloyloxy-2-hydroxypropoxy)benzophenone.

The polymerizing UV-absorbing monomer is used for further enhancing the weather resistance of the coating layer that contains the resulting acrylic copolymer, and its content in all the polymerizing monomer component is as follows. The polymerizing benzotriazole is, from the viewpoint of the sufficient UV-absorbing capability and discoloration resistance to UV radiation, preferably in an amount of from 0.1 to 50% by mass, more preferably from 0.5 to 40% by mass, further preferably from 1 to 30% by mass. The polymerizing benzophenone is, from the viewpoint of the sufficient UV-absorbing capability and the good compatibility, preferably in an amount of from 0.1 to 10% by mass, more preferably from 0.2 to 5.0% by mass.

In the present invention, the above-mentioned benzotriazoles are preferred for the polymerizing UV-absorbing monomer from the viewpoint of the copolymerization reactivity.

(Cycloalkyl (Meth)acrylate)

The cycloalkyl (meth)acrylate for use in the present invention is a component for enhancing the hardness, the elasticity, the solvent resistance, the gasoline resistance and the weather resistance of the coating film, especially when the resulting acrylic copolymer is used as a two-component urethane resin coating material. Preferably, the cycloalkyl (meth)acrylate includes, for example, cyclohexyl (meth)acrylate, methylcyclohexyl (meth)acrylate, t-butylcyclohexyl (meth)acrylate, cyclododecyl (meth)acrylate. One or more of these may be used here either singly or as combined. The cycloalkyl (meth)acrylate is in the polymerizing monomer component preferably in an amount of from 5 to 80% by mass, more preferably from 10 to 70% by mass, even more preferably from 15 to 50% by mass of the monomer component. When the amount to be used is within the above range, the coating film can fully exhibit the properties thereof such as the hardness, the weather resistance and others, and can favorably satisfy both the dryability and the leveling property.

(Crosslinking Functional Group)

In the weather-resistant coating layer, the acrylic copolymer has a crosslinking functional group, and the layer is formed through crosslinking of the polymer with a crosslinking compound. Accordingly, the acrylic copolymer has a crosslinked structure, and the physical properties and the weather resistance of the coating layer are thereby enhanced and, as a result, the film can keep excellent weather resistance capability for a long period of time.

The crosslinking functional group that the acrylic copolymer has includes, for example, a hydroxyl group, an amino group, a carboxyl group or its anhydride, an epoxy group, an amide group One or more such crosslinking functional

groups is in the acrylic copolymer. Of those crosslinking functional groups, preferred in the present invention are those having an active hydrogen such as a hydroxyl group, an amino group, a carboxyl group, from the viewpoint of the stability.

The polymerizing unsaturated monomer having a hydroxyl group includes, for example, hydroxyl group-having (meth)acrylic monomers such as hydroxyethyl (meth)acrylate, hydroxypropyl (meth)acrylate, caprolactone-modified hydroxyl(meth)acrylate, polyester diol mono(meth)acrylates to be produced from phthalic acid and propylene glycol. Preferred are hydroxypropyl acrylate, hydroxyethyl methacrylate. One or more of these may be used here either singly or as combined.

The polymerizing monomer having a crosslinking functional group is, when a polyisocyanate or any other crosslinking compound is added to the resulting acrylic copolymer to prepare a resin composition for a thermosetting coating material, a necessary ingredient for the reaction with the crosslinking compound; and it is in the polymerizing monomer component in an amount of from 2 to 35% by mass of all the monomer component, more preferably from 3.5 to 23% by mass. When the amount to be used is within the above range, then the amount of the crosslinking functional group in the resulting acrylic copolymer could be suitable and the reactivity between the acrylic copolymer and the crosslinking compound could be kept, and therefore, the crosslinking density could be sufficient and the coating film could have the intended film capability. In addition, the storage stability after addition of the crosslinking compound is good.

(Other Polymerizing Unsaturated Monomer)

Any other polymerizing unsaturated monomer may be used for forming the acrylic copolymer.

The other polymerizing unsaturated monomer for use in the present invention includes, for example, alkyl (meth)acrylates such as methyl (meth)acrylate, ethyl (meth)acrylate, propyl (meth)acrylate, isopropyl (meth)acrylate, butyl (meth)acrylate, isobutyl (meth)acrylate, tertiary butyl (meth)acrylate, 2-ethylhexyl (meth)acrylate, lauryl (meth)acrylate, stearyl (meth)acrylate; epoxy group-containing unsaturated monomers such as glycidyl (meth)acrylate; nitrogen-containing unsaturated monomers such as (meth)acrylamide, N,N'-dimethylaminoethyl (meth)acrylate, vinylpyridine, vinylimidazole; halogen-containing unsaturated monomers such as vinyl chloride, vinylidene chloride; aromatic unsaturated monomers such as styrene, $\alpha$-methylstyrene, vinyltoluene; vinyl esters such as vinyl acetate; vinyl ether; unsaturated cyan compounds such as (meth)acrylonitrile. One or more selected from those groups may be used here.

In view of the internal catalytic action during the crosslinking reaction, a polymerizing unsaturated monomer having an acidic functional group is also usable here, and it includes, for example, carboxyl group-containing unsaturated monomers such as (meth)acrylic acid, crotonic acid, itaconic acid, maleic acid, maleic anhydride; sulfonic acid group-containing unsaturated monomers such as vinylsulfonic acid, styrenesulfonic acid, sulfoethyl (meth)acrylate; acid phosphate-base unsaturated monomers such as 2-(meth)acryloyloxyethyl acid phosphate, 2-(meth)acryloyloxypropyl acid phosphate, 2-(meth)acryloyloxy-2-chloropropyl acid phosphate, 2-methacryloyloxyethylphenyl phosphate. One or more selected from those groups may be used here.

The above-mentioned other polymerizing monomer may be used within a range not detracting from the effect of the acrylic copolymer in the present invention, and its amount to be used may be from 0 to 92.9% by mass of the polymerizing monomer component. Of the other polymerizing monomer, the acidic functional group-containing polymerizing monomer acts as an internal catalyst in the crosslinking reaction of the acrylic copolymer with a crosslinking compound, and its amount may be from 0 to 5% by mass of the polymerizing monomer component, preferably from 0.1 to 3% by mass.

(Polymerization Method for Acrylic Copolymer)

The method of producing the acrylic copolymer by the use of the above-mentioned monomers is not specifically defined, for which are employable is any conventional known polymerization methods.

For example, when a solution polymerization method is employed, the solvent usable therein includes, for example, high-boiling-point aromatic solvents such as toluene, xylene; ester solvents such as ethyl acetate, butyl acetate, cellosolve acetate, propylene glycol monomethyl ether acetate; ketone solvents such as methyl ethyl ketone, methyl isobutyl ketone; aliphatic alcohols such as isopropanol, n-butanol, isobutanol; alkylene glycol monoalkyl ethers such as propylene glycol monomethyl ether, propylene glycol monoethyl ether, diethylene glycol monoethyl ether. One or more of these may be used here either singly or as a mixture thereof.

As the polymerization initiator, usable is an ordinary radical polymerization initiator including 2,2'-azobis-(2-methylbutyronitrile), t-butylperoxy-2-ethyl hexanoate, 2,2'-azobisisobutyronitrile, benzoyl peroxide, di-t-butyl peroxide. One or more of these may be used here either singly or as combined. Not specifically defined, the amount to be used may be set defined in accordance with the characteristics of the desired acrylic resin.

The reaction conditions such as the reaction temperature, the reaction time and others are not specifically defined. For example, the reaction temperature may be within a range of from room temperature to 200°C, preferably within a range of from 40 to 140°C. The reaction time may be suitably set depending on the composition of the monomer

ingredients and on the type of the polymerization initiator, in order that the polymerization reaction could well finish.

In the present invention, in order to enhance the UV durability and the wet heat durability as the weather resistance, the acrylic copolymer preferably has at least a UV-absorbing group and a cycloalkyl group, and more preferably has at least a UV-stabilizing group, a UV-absorbing group and a cycloalkyl group.

Concretely, from the above-mentioned viewpoint, the acrylic copolymer preferably has at least functional groups of the following combinations (1) to (8), more preferably at least functional groups of the following combinations (1) to (4), even more preferably at least functional groups of the combinations (1) and (2).

(1) Hindered amine group/benzotriazole group/cycloalkyl group/crosslinking functional group.
(2) Hindered amine group/benzophenone group/cycloalkyl group/crosslinking functional group.
(3) UV-absorbing group/cycloalkyl group/crosslinking functional group.

(Crosslinking Compound)

Not specifically defined, the crosslinking compound may be a compound or a polymer having, in one molecule, at least two functional groups capable of crosslinking and curing with the above-mentioned crosslinking functional group; and depending on the type of the functional group that the above acrylic copolymer has, one or more such crosslinking compounds may be used here.

For example, when the crosslinking group that the acrylic copolymer has is a hydroxyl group, then the crosslinking compound includes, for example, compounds or polymers having a phenol group, an epoxy group, a melamine group, an isocyanate group or a dialdehyde group. In view of the crosslinking reactivity and the pot life, preferred are compounds or polymers having an epoxy group, a melamine group or an isocyanate group; and for pot life control, more preferred is an isocyanate group.

In case where the crosslinking functional group that the acrylic copolymer has is a carboxyl group or its anhydride, there are mentioned crosslinking compounds such as polyisocyanate compounds or their modified derivatives, as well as aminoplast resins, epoxy resins. In case where the crosslinking functional group is an epoxy group, there may be mentioned crosslinking compounds including compounds such as amines, carboxylic acids, amides, N-methylolalkyl ethers. In case where the crosslinking functional group is a hydroxyl group or an amino group, there may be mentioned crosslinking compounds such as polyisocyanate compounds or their modified derivatives, as well as epoxy resins, aminoplast resins. Of those, preferred are polyisocyanate compounds and/or epoxy resins in a combination with a group having an active hydrogen.

In the present invention, a combination where the crosslinking functional group is a hydroxyl group and the crosslinking compound is an isocyanate compound is preferred as a two-component reactive coating agent, in view of the reactivity of the ingredients, and of the resulting weather resistance, the hardness and the flexibility of the coating layer.

<Resin Produced by Crosslinking of Polycaprolactone-polyol and/or Polycarbonate-polyol>

The resin constituting the weather-resistant coating layer (2) in the present invention is formed through crosslinking of a polycaprolactone-polyol and/or a polycarbonate-polyol with a crosslinking compound.

As a coating material, polyester-polyol is readily hydrolyzed, but polycaprolactone-polyol is has more excellent waterproofness than adipate polyester-polyol, and has better weather resistance and heat resistance than polyether-polyol. Polycarbonate-polyol has more excellent heat resistance, moisture resistance and weather resistance than polyester-polyol and polyether-polyol. Further, in view of the gas barrier property, preferred are those produced by crosslinking the above-mentioned polycaprolactone-polyol.

On the other hand, polycaprolactone-polyol and polycarbonate-polyol have a drawback in that their interlayer adhesiveness is poor as compared with polyester-polyol. However, their drawback could be solved by various measures of controlling the degree of surface treatment such as corona treatment of substrate films, or previously forming a thin coating layer of only the adhesive component of crosslinking agent, or increasing the blend ratio of the crosslinking compound in the coating material, whereby the weather resistance of the coating layer may be further enhanced.

(Polycaprolactone -Polyol)

The polycaprolactone-polyol may be produced according to the known method, in particular, by ring-opening polymerization of ε-caprolactone in the presence of a catalyst and using a polyalcohol mentioned below as an initiator.

The polyalcohol as the polymerization initiator for ε-caprolactone includes aliphatic polyalcohols such as ethylene glycol, diethylene glycol, 1,2-propylene glycol, dipropylene glycol, 1,3-butanediol, 1,4-butanediol, 1,6-hexanediol, neopentyl glycol, trimethylolpropane, glycerin, pentaerythritol, polytetramethylene ether glycol, and polymerized products or copolymerized products produced by ring-opening polymerization of ethylene oxide, propylene oxide or butylene

oxide using such polyalcohol as the initiator; cyclohexyl group-containing polyalcohols such as cyclohexanedimethanol, cyclohexanediol, hydrogenated bisphenol A, and polymerized products or copolymerized products produced by ring-opening polymerization of ethylene oxide, propylene oxide or butylene oxide using such glycol as the initiator; aromatic group-containing polyalcohols such as bisphenol A, hydroquinone bis(2-hydroxyethyl ether), p-xylylene glycol, bis(β-hydroxyethyl) terephthalate, and polymerized products or copolymerized products produced by addition polymerization of ethylene oxide, propylene oxide or butylene oxide using such a glycol as the initiator; polyalcohols having various functional groups, for example, carboxyl group-having glycols such as dimethylolpropionic acid, diphenolic acid, tertiary amine-having glycols such as N-methyldiethanolamine.

Commercial products are available, for example, Daicel Chemical Industry's "Placcel 200" series, Union Carbide's "TONE" series.

(Polycarbonate -Polyol)

The polycarbonate-polyol may be produced according to a known method. As the polycarbonate-diol, preferably used here is a polycarbonate-diol produced through polycondensation of an aliphatic diol having from 2 to 12 carbon atoms, such as 1,4-butanediol, 1,5-pentanediol, 1,6-hexanediol, 1,8-octanediol, 1,10-decanediol or their mixture, with diphenyl carbonate or phosgene.

In view of the miscibility with an organic solvent and a crosslinking compound, preferred is an ether-modified polycarbonate-polyol having a recurring structural unit of $-[(CH_2)_3-OC(O)O]-$ or $-[(CH_2)_2C(CH_3)(CH_2)_2-OC(O)O]-$, which is produced by reacting a polyalkylene carbonate-polyol having a number-average molecular weight of at most 10,000, preferably from 500 to 5,000, and a polyethylene glycol monoalkyl ether having a number-average molecular weight of at most 5,000. The number-average molecular weight is a polystyrene-equivalent value in gel permeation chromatography analysis.

For homogeneous crosslinking reaction of polycarbonate-polyol and crosslinking compound (with controlling the reaction so as not to partially increase the molecular weight of the product), the terminal hydroxyl index is from 92.5 to 98.5, more preferably from 95.0 to 97.5. In case where the terminal hydroxyl content is large, a high-molecular-weight product tends to form in the crosslinking reaction; but when the terminal hydroxyl content is small, the crosslinking reaction is difficult to promote sufficiently and the molecular weight distribution of the product may be broad and the hydrolysis resistance after the crosslinking may be insufficient. The terminal hydroxyl index is the ratio (%) of the peak area of polyol to the sum total of the peak area of monoalcohol and polyol as analyzed by gas chromatography. The gas chromatography analysis is as follows: The sample is heated from 40°C up to 220°C at 10°C/min, and kept as such for 15 minutes, and analyzed with a hydrogen flame ionization detector (FID).

Commercial products are available, for example, Nippon Polyurethane Industry's "Nippolan" series, Asahi Chemicals' "PCDL", Daicel Chemical Industry's "Placcel CD" series.

The crosslinking compound may be a compound or a polymer having, in one molecule, at least two functional groups capable of crosslinking and curing with the hydroxyl group that the polycaprolactone-polyol and/or the polycarbonate-polyol have as defined below; and one or more such crosslinking compounds may be suitably selected and used here.

Concretely, there may be mentioned compounds or polymers having an epoxy groupand/or an isocyanate. In view of the crosslinking reactivity and the pot life, preferred are compounds or polymers having an epoxy group or an isocyanate group; and for pot life control, more preferred are an isocyanate group and/or an epoxy group. Even more preferred are isocyanate compounds as a two-component reactive coating agent, in view of the reactivity of the ingredients, and of the resulting weather resistance, the hardness and the flexibility of the coating layer.

In the present invention, the resins to constitute the above-mentioned weather-resistant coating layer (2), are those produced by crosslinking a polycaprolactone-polyol and/or a polycarbonate-polyol as defined above with an isocyanate compound and/or an epoxy compound.

<Resin Produced by Crosslinking of Modified Polyvinyl Alcohol>

The resin constituting the weather-resistant coating layer (3) in the present invention is formed through crosslinking of a specific modified polyvinyl alcohol.

The modified polyvinyl alcohol includes resins produced by modifying the hydroxyl group of polyvinyl alcohol by acetalization or butyralization from the viewpoint of the waterproofness in a high-temperature high-humidity environment.

The modified polyvinyl alcohol may have a hydroxyl group remaining therein, and crosslinking the hydroxyl group may further enhance the waterproofness of the layer.

The modification product by butyralization, polyvinyl butyral can be produced according to a known method. From the viewpoint of securing good weather resistance and increasing the solvent solubility to form a uniform coating

layer, polyvinyl butyral having a degree of butyralization of from 50 to 80 mol%, more preferably from 60 to 75 mol%, and having an isotactic triad-type residual hydroxyl group content of at most 1 mol%, more preferably at most 0.5 mol% is used.

The weather resistance and the solvent solubility of polyvinyl butyral depend on the degree of butyralization thereof and preferred is polyvinyl butyral having a higher degree of butyralization. However, 100 mol% butyralization of polyvinyl alcohol not achieved, and from the viewpoint of industrial production, it is disadvantageous to increase the degree of butyralization to the utmost limit. In addition, depending on the type of the remaining hydroxyl group, the solvent miscibility may change; and when the isotactic triad-type hydroxyl group content is large, then the solubility in organic solvent may tend to lower.

The modification product by acetalization, polyvinyl acetacetal can be produced according to a known method. In view of the heat resistance, the degree of acetalization is preferably higher. The polyvinyl acetacetal has a degree of acetalization of from 50 to 80 mol%, more preferably from 65 to 80 mol%. From the viewpoint of producing a polyvinyl acetacetal resin having a narrow particle size distribution for the purpose of increasing the solvent solubility and for forming a uniform coating layer, it is desirable to mix a suitable amount of an aldehyde having at least 3 carbon atoms and to keep the system at a suitable temperature after the precipitation of the acetalized product.

As the crosslinking compound, the same as that used for the above-mentioned weather-resistant coating layer (2) may be used here. In the present invention, a combination where the crosslinking functional group is a hydroxyl group and the crosslinking compound is an isocyanate compound is preferred as a two-component reactive coating agent, in view of the reactivity of the ingredients, and of the resulting weather resistance, the hardness and the flexibility of the coating layer.

The resin constituting the weather-resistant coating layer (3) in the present invention is one formed through crosslinking of polyvinyl butyral and/or polyvinyl acetal with an isocyanate compound and/or an epoxy compound.

Of the above-mentioned weather-resistant coating layers (1) to (3), in the present invention, preferred is the weather-resistant coating layer (1) from the viewpoint of the weather resistance and the gas barrier property thereof.

The polyisocyanate to be used as the crosslinking compound in the above-mentioned weather-resistant coating layers (1) to (3) may be one or more, as a mixture thereof, of a diisocyanate or its dimer (urethodione), trimer (isocyanurate, triol adduct, biuret). For example, the diisocyanate ingredient includes 2,4-tolylene diisocyanate, 2,6-tolylene diisocyanate, p-phenylene diisocyanate, diphenylmethane diisocyanate, m-phenylene diisocyanate, hexamethylene diisocyanate, tetramethylene diisocyanate, 3,3'-dimethoxy-4,4'-biphenylene diisocyanate, 1,5-naphthalene diisocyanate, 2,6-naphthalene diisocyanate, 4,4'-diisocyanate diphenyl ether, 1,5-xylylene diisocyanate, 1,3-diisocyanate methylcyclohexane, 1,4-diisocyanate methylcyclohexane, 4,4'-diisocyanate cyclohexane, 4,4,'-diisocyanate cyclohexylmethane, isophorone diisocyanate, dimer acid diisocyanate, norbornene diisocyanate. From the viewpoint of the yellowing resistance, preferred are xylylene diisocyanate (XDI) series, isophorone diisocyanate (IPDI) series, hexamethylene diisocyanate (HDI) series. From the viewpoint of the fastness, the gas barrier property and the weather resistance, preferred are isocyanurate series or biuret series of hexamethylene diisocyanate.

Not specifically defined, the epoxy resin may be a compound having at least 2 epoxy groups in one molecule, including, for example, sorbitol glycidyl ether, sorbitan polyglycidyl ether, polyglycerol polyglycidyl ether, pentaerythritol polyglycidyl ether, triglycidyl, tris(2-hydroxyethyl)isocyanurate, neopentylglycol diglycidyl ether, 1,6-hexanediol diglycidyl ether, ethylene glycol diglycidyl ether, bisphenol-type epoxy resins.

Not specifically defined, the amount to be used of the above-mentioned crosslinking compound may be suitably determined depending on the type of crosslinking compound. Preferably, the reactive group ratio of the crosslinking group (e.g., hydroxyl group) of the resin to constitute the weather-resistant coating layer to the crosslinking group of the crosslinking compound is hydroxyl group/crosslinking group = 1/1 to 1/20 from the viewpoint of the intralayer cohesive force and the interlayer adhesiveness, more preferably from 1/1 to 1/10. When the crosslinking group ratio falls within the above range, it is advantageous in point of the adhesiveness, the high-temperature high-humidity resistance, the gas barrier property, the blocking resistance.

One or more crosslinking catalysts such as salts, inorganic substances, organic substances, acid substances, alkali substances may be added to the crosslinking compound for promoting the crosslinking reaction. For example, in case where a polyisocyanate compound is used as the crosslinking compound, one or more known catalysts such as dibutyl tin dilaurate, tertiary amine may be added thereto.

A silane coupling agent, a titanium coupling agent, a ray-cutoff agent, a UV absorbent, a stabilizer, a lubricant, an antiblocking agent, an antioxidant may be added, or one produced by copolymerizing any of these with the above-mentioned resin may be used.

(Method of Forming Weather-Resistant Coating Layer)

The weather-resistant coating layer may be formed according to a known coating method suitably employed here. For example, usable is any coating method with a reverse roll coater, a gravure coater, a rod coater, an air doctor

coater, a spray or a brush. A deposited film may be dipped in a resin solution. After the coating, the solvent may be evaporated away according to a known drying method of drying by heating, for example, hot air drying at a temperature of from 80 to 200°C or so, hot roll drying, or IR drying. For enhancing the waterproofness and the durability, the coating layer may be processed for crosslinking through electron beam radiation.

Preferably, the thickness of the weather-resistant coating layer is from 0.005 to 5 μm or so, more preferably from 0.01 to 1 μm. The thickness of at most 5 μm is preferred as securing good lubricity and the anchor coating layer itself delaminates little from the substrate film owing to the internal stress; and the thickness of at least 0.005 μm is preferred as securing thickness uniformity.

The weather-resistant coating layer can flatten the surface of the substrate film, on which, therefore, particles to form an inorganic thin film can deposit densely to form a uniform layer, thereby securing a good gas barrier property.

[Inorganic Thm Film]

For forming the inorganic thin film, herein employable is any method of a vapor deposition method, a coating method. From the viewpoint of forming a uniform thin film having a good gas barrier property, preferred is a vapor deposition method. The vapor deposition method includes a physical vapor deposition (PVD) method, a chemical vapor deposition (CVD) method. The physical vapor deposition method includes vacuum evaporation, ion plating, sputtering; and the chemical vapor deposition method includes plasma CVD with plasma, catalytic chemical vapor deposition (Cat-CVD) comprising catalytic thermodecomposition of a material gas with a heated catalyst.

Preferably, the inorganic thin film is multilayered from the viewpoint of stably keeping the good gas barrier property for a long period of time, and more preferably, the film comprises at least two inorganic thin-film layers. For this, various known film formation methods may be combined. For example, on the weather-resistant coating layer, a multilayer inorganic thin film may be formed, for example, having in that order a layer constitution of vacuum evaporation film/vacuum evaporation film, vacuum evaporation film/plasma CVD film, vacuum evaporation film/plasma treatment/vacuum evaporation film, vacuum evaporation film/plasma CVD film/vacuum evaporation film, vacuum evaporation film/Cat-CVD film/vacuum evaporation film, vacuum evaporation film/weather-resistant coat/vacuum evaporation film, plasma CVD film/vacuum evaporation film, plasma CVD film/vacuum evaporation film/plasma CVD film. Above all, a multilayer constitution of vacuum evaporation film/plasma CVD film is preferred from the viewpoint of the good gas barrier property, the adhesiveness, the producibility.

The inorganic substance to constitute the inorganic thin film includes silicon, aluminium, magnesium, zinc, tin, nickel, titanium, hydrogenated carbon, as well as their oxides, carbides, nitrides, and their mixtures. Preferred are silicon oxide, aluminium oxide, and hydrogenated carbon-base diamond-like carbon. Especially preferred are inorganic oxides such as silicon oxide, silicon nitride, silicon oxinitride, aluminium oxide, in particular, silicon oxide, as capable of stably maintaining a good gas barrier property.

Preferably, the material gas for use in chemical vapor deposition comprises at least one or more different types of gases. For example, in forming a silicon compound thin film, preferred is a combined use of a first starting material gas containing silicon, and a second starting material gas of ammonia, nitrogen, oxygen, hydrogen or rare gas such as argon. As the first starting material gas containing silicon, usable are one or two, either singly or as combined, of monosilane, tetramethoxysilane, methyltrimethoxysilane, dimethyldimethoxysilane, phenyltrimethoxysilane, diphenyldimethoxysilane, tetraethoxysilane, methyltriethoxysilane, dimethyldiethoxysilane, phenyltriethoxysilane, diphenyldiethoxysilane, hexyltrimethoxysilane, hexyltriethoxysilane, decyltrimethoxysilane, decyltrimethoxysilane, trifluoropropyltrimethoxysilane, hexamethyldisiloxane, hexamethyldisilazane. The starting material gas may be liquid or vapor at room temperature; and the liquid starting material may be fed into the apparatus after vaporized in a material vaporizer. In the catalytic chemical vapor deposition method, preferred is a monosilane gas as not degrading the heated catalyst and from the viewpoint of the reactivity and the reaction speed.

The thickness of the inorganic thin film may be generally from 0.1 to 500 nm or so, but preferably from 0.5 to 100 nm, more preferably from 1 to 50 nm. Within the above range, the inorganic thin film may have a sufficient gas barrier property and may secure excellent producibility not cracking or delaminating.

[Protective Layer]

The gas barrier film of the present invention may have a protective layer for protecting the uppermost layer of the inorganic thin film. For the resin to form the protective layer, usable is any of a solvent-base or water-base resin, concretely including polyester resin, urethane resin, acrylic resin, polyvinyl alcohol resin, ethylene vinyl alcohol resin, vinyl-modified resin, nitrocellulose resin, silicone resin, isocyanate resin, epoxy resin, oxazoline group-having resin, modified styrene resin, modified silicone resin, alkyl titanate. One or more of these may be used here either singly or as combined. As the protective layer, usable is a layer formed by mixing at least one type of inorganic particles selected from a silica sol, an alumina sol, a granular inorganic filler and a layered inorganic filler, with at least one type of the

above-mentioned resin for the purpose of enhancing the barrier property, the abrasion resistance and the lubricity of the layer, or a layer of an inorganic particles-containing resin formed through polymerization of a starting material of the resin in the presence of the inorganic particles.

As the resin to from the protective layer, preferred is the above-mentioned water-base resin from the viewpoint of enhancing the gas barrier property of the inorganic thin film. As the water-base resin, preferred is a vinyl alcohol resin or an ethylene vinyl alcohol resin.

As the protective layer, usable is a resin layer formed through coating with an aqueous liquid that contains a polyvinyl alcohol and an ethylene/unsaturated carboxylic acid copolymer.

The thickness of the protective layer is preferably from 0.05 to 10 μm, more preferably from 0.1 to 3 μm from the viewpoint of the printability and the workability. For forming the layer, suitably employable is any known coating method. For example, herein usable is any coating method with a reverse roll coater, a gravure coater, a rod coater, an air doctor coater, a spray or a brush. A deposited film may be dipped in a resin solution for protective layer. After the coating, water may be evaporated away according to a known drying method of drying by heating, for example, hot air drying at a temperature of from 80 to 200°C or so, hot roll drying, or IR drying. For enhancing the waterproofness and the durability, the coating layer may be processed for crosslinking through electron beam radiation.

(Method for Producing Gas Barrier Film)

The method for producing the gas barrier film of the present invention comprises forming a weather-resistant coating layer on at least one surface of a substrate film followed by forming an inorganic thin film on the surface of the coating layer, wherein the weather-resistant coating layer is selected from the above-specified (1), (2), and (3), preferably, the layer (1) formed of an acrylic copolymer produced through reaction of at least one selected from a group consisting of a polymerizing UV-stabilizing monomer (optional component), a polymerizing UV-absorbing monomer, a cycloalkyl (meth)acrylate and a crosslinking functional group-having polymerizing unsaturated monomer. The constitutive layers, and the weather-resistant coating layers (1) to (3) are as described in the above.

As the weather-resistant coating layer, preferred is one formed through reaction of the above-mentioned, crosslinking functional group-having acrylic copolymer with a crosslinking compound, as described in the above.

(Method for Enhancing the Weather Resistance of Gas Barrier Film)

The method for enhancing the weather resistance of a gas barrier film of the present invention comprises using, in a gas barrier film having a substrate film, a coating film formed on at least one surface thereof and an inorganic thin film formed on the surface of the coating layer, any one selected from an acrylic copolymer having a UV-stabilizing group (optional group), a UV-absorbing group, a cycloalkyl group and a crosslinking functional group, with a crosslinking compound, a resin formed by crosslinking a polycaprolactone-polyol and/or a polycarbonate-polyol as the essential ingredient with a crosslinking compound and a resin formed by crosslinking a poyvinylbutyral and/or polyvinyl acetal for the coating layer, preferably using an acrylic copolymer having a UV-stabilizing group, a UV-absorbing group, a cycloalkyl group and a crosslinking functional group, with a crosslinking compound. The constitutive layers, the weather-resistant coating layers and the resins are as described in the above. As the coating layer, preferred is one formed by reacting of the above-mentioned, crosslinking functional group acrylic copolymer and a crosslinking compound.

[Examples]

The invention is described more concretely with reference to the following Examples, by which, however, the invention should not be limited at all. The properties of the gas barrier films produced in Examples were evaluated as follows:

<Delamination Test>

An urethane adhesive (blend of Mitsui Chemical Polyurethane's "Takelac A543" and "Takenate A3") was applied to the surface of the inorganic thin film of the produced gas barrier film or of the produced gas barrier film after lightfastness testing, and then dried at 80°C for 1 minute to thereby form an adhesive resin layer thereon having a thickness of about 10 μm; and a non-oriented polypropylene film (Toyobo's "Pyrene Film-CT P1146) having at thickness of 60 μm was laminated on the adhesive resin layer, and aged at 40°C for 3 days to give a laminate.

Next, according to JIS Z1707, a strip-like test piece having a width of 15 mm was cut out of the laminate, and one end thereof was partly delaminated. Using a peeling tester (Shimadzu's trade name, EZ-TEST), the sample was delaminated through T-peel test at a speed of 100 mm/min, and its delamination strength (g/15 mm) was determined.

<Water Vapor Permeability Measurement>

The laminate sample of the gas barrier film before and after the lightfastness test was analyzed for the water vapor permeability according to the conditions of JIS Z0222 "Method for Testing Water Vapor Permeability of Moisture-Proof Packaging Containers" and JIS Z0208 "Method for Testing Water Vapor Permeability of Moisture-Proof Packaging Materials (Cup Method)".

Two gas barrier films each having a water vapor-permeable area of 7.0 cm × 7.0 cm were formed into a bag sealed along four sides thereof enclosing about 10 g of anhydrous calcium chloride as a moisture absorbent. The thus prepared bag was placed in a thermo-hygrostat chamber maintained at a temperature of 40°C and a relative humidity of 90%, and a mass (unit: 0.1 mg) of the bag was measured at time intervals of 72 hours or longer until 14 days elapsed at which the increase in mass of the bag was kept substantially constant, and the water vapor permeability of the bag was computed from the following formula.

$$\text{Water Vapor Permeability (g/m2/24 hr)} = (m/s)/t$$

wherein m is an increase in mass (g) of the bag occurring during the last two time intervals for the measurement among the testing period;
s is a water vapor-permeable area (m2); and
t represents the value expressed by [(time (hr) taken during the last two time intervals for the measurement among the testing period)/24 (hr)].

The above-mentioned delamination test and the water vapor permeability measurement were conducted for the obtained laminates , for the laminates after the high-temperature high-humidity test (1) or (2) mentioned below, and for the laminates after the lightfastness test mentioned below.

<High-Temperature High-Humidity Test>

(1) The obtained laminate was stored at 60°C and 90% RH for 30 days.
(2) The obtained laminate was stored at 85°C and 85% RH for 30 days.

<Lightfastness Test>

The obtained gas barrier film was exposed to light with the inorganic thin film side thereof kept facing the light source of a weatherometer (xenon-type Suga Test Instruments' WBL 75XS), at a surface irradiation intensity of 60 $W/m^2$, at a test wavelength of from 300 to 400 nm, at a Black panel temperature of 63°C and at a relative humidity of 50%, for 200 hours.

<Measurement of Thickness of Inorganic Thin Film and Weather-Resistant Coating Layer>

The obtained gas barrier film was buried in a resin, cut into ultra-thin pieces in the cross-sectional direction, and the piece was analyzed with a transmission electronic microscope.

<Composition Analysis of Inorganic Thin Film>

The inorganic thin film of the obtained gas barrier film was analyzed for the elementary composition, using Shimadzu's ESCA-3400.

Example 1 (not according to the invention):

A biaxially-oriented polyethylene naphthalate film (Teijin DuPont's "Q51C12") having a thickness of 12 μm was used as the substrate film; and a coating liquid mentioned below was applied onto the corona-treated surface thereof, and dried to form thereon a coating layer having a thickness of 0.1 μm.

Next, using a vacuum evaporation apparatus, SiO was evaporated in vacuum at $1.33 \times 10^{-3}$ Pa ($1 \times 10^{-5}$ Torr) according to a high-frequency heating system, thereby forming a thin film of SiOx (x = 1.7) having a thickness of 20 nm on the coating layer to produce a thin film gas barrier film.

Coating Liquid

100 parts by mass of ethyl acetate was fed into a four-neck flask equipped with a stirrer, a thermometer, a condenser and a nitrogen gas introducing duct, in a nitrogen gas flow, heated up to 80°C; and a mixture of the starting material composed of the polymerizing monomer ingredients shown in Table 1-1 and 1 part by mass of benzoyl peroxide was dropwise added to it, taking 2 hours, and this was kept at 80°C for 4 hours to give a 50 mas.% solution of an acrylic copolymer.

Next, an epoxy copolymer (Nagase Chemtex's "Denacol EX622") was mixed in the acrylic resin solution so that the equivalent ratio of the epoxy group to the carboxyl group could be 1/1.

Examples 2 to 12 (Examples 2, 5, 6, 9 and 12 not according to the invention):

Gas barrier films were produced in the same manner as in Example 1, for which, however, an acrylic copolymer solution was prepared using a starting material comprising the polymerizing monomer ingredients shown in Table 1-1, and then an isocyanate resin (Sumitomo Bayer Urethane's "Sumidur N-3200") was mixed in the acrylic copolymer solution so that the equivalent ratio of the isocyanate group to the hydroxyl group could be 1/1.

Example 13:

An aqueous solution of an ammonium salt of a copolymer of methacrylic acid and butyl methacrylate (ratio by mass, 25/75) was applied onto the inorganic thin film surface of the gas barrier film of Example 10, and dried to form thereon a protective film having a thickness of 0.3 μm.

Example 14:

Using a plasma CVD apparatus, a plasma CVD film of thin SiOxNy (x = 1.6, y = 0.2) having a thickness of 20 nm was formed on the inorganic thin film surface of the gas barrier film of Example 10. For this, tetraethoxysilane was used as the starting material; oxygen, nitrogen and argon were used as the reaction gas; a plasma of 1 kW was applied in vacuum of 10.7 Pa ($8 \times 10^{-2}$ Torr) from a 13.56 MHz high-frequency discharge plasma source. Next, a vacuum evaporation film was formed on the plasma CVD film in the same manner as in Example 1, thereby producing a three-layered inorganic thin film gas barrier film.

Comparative Example 1:

A gas barrier film was produced in the same manner as in Example 1, for which, however, a mixture prepared by mixing an isocyanate compound (Nippon Polyurethane Industry's "Coronate L") and a saturated polyester (Toyobo's "Vylon 300") in a ratio by mass of 1/1 was used as the coating liquid.

Comparative Example 2:

A gas barrier film was produced in the same manner as in Example 1, for which, however, a mixture prepared by mixing an acrylic copolymer (Mitsui Chemical Polyurethane's "Takelac UA-902") and an aromatic isocyanate, tolylene diisocyanate (TDI) (Mitsui Chemical Polyurethane's "Cosmonate 80") so that the equivalent ratio of the hydroxyl group value to the isocyanate group value could be 1/1, was used as the coating liquid.

Comparative Example 3:

A gas barrier film was produced in the same manner as in Example 1, for which, however, a mixture prepared by mixing a polyester resin (Takamatsu Oil & Fat's "Pesresin A-120") and an acrylic resin (Johnson Polymer's "JDX-6500") in a solid ratio of 1/1 was used as the coating liquid.

Comparative Example 4:

A gas barrier film was produced in the same manner as in Example 2, for which, however, the starting material monomers for the acrylic copolymer solution were changed as in Table 1-2 to prepare the coating liquid.

Comparative Example 5:

In the starting material monomers in Example 10, the monomers a-1 and b-2 were removed. A hindered amine-base UV stabilizer (HALS), Ciba Specialty Chemicals' "Tinuvin 123", and a benzotriazole-base UV absorbent (UVA), Ciba Specialty Chemicals' "Tinuvin PS", were added in an amount, as the resin solid thereof, of 2% by mass and 35% by mass, respectively, to prepare an acrylic resin solution. Next, an isocyanate resin (Sumitomo Bayer Urethane's "Sumidur N-3200") was mixed in the acrylic resin solution so that the equivalent ratio of the isocyanate group to the hydroxyl group could be 1/1. Using this, a gas barrier film was produced in the same manner as in Example 1.

Comparative Example 6:

Using an aqueous solution prepared by dissolving 67.5 ml of ethyl acrylate, 66.4 ml of methyl methacrylate, 21.3 g of itaconic acid, and 51 g of sodium p-styrenesulfonate in 250 ml of ion-exchanged water, an aqueous solution prepared by dissolving 8 ml of sodium dodecylbenzenesulfonate in 100 ml of water, an aqueous solution prepared by dissolving 2 g of ammonium sulfate in 20 ml of water, and 505 ml of ion-exchanged water, ethyl acrylate/methyl methacrylate/itaconic acid/p-styrenesulfonic acid copolymer (37.5/37.5/10/15 by mol) was prepared. 3% by mass of the acrylic copolymer, 0.03% of a surfactant, ICI's "Synperonic NP10", 0.3% of a melamine-base crosslinking compound, Mitsui Cytec's "Cymel 300" and 0.03% of an aqueous 10% ammonium p-toluenesulfonate solution were mixed. Using this, a gas barrier film was produced in the same manner as in Example 1.

Thus obtained, the gas barrier films were tested according to the methods mentioned in the above for the water vapor permeability before and after the lightfastness test, and for the delamination strength before and after the high-temperature high-humidity test and the lightfastness test. The results are shown in Table 2-1 and Table 2-2.

The monomers used in the above Examples and Comparative Examples are mentioned below.

(Polymerizing UV-Stabilizing Monomers)

a-1: 4-methacryloyloxy-2,2,6,6-tetramethylpiperidine
a-2: 4-methacryloyloxy-2,2,6,6-pentamethylpiperidine
a-3: 1-methacryloyl-4-methacryloylamino-2,2,6,6-tetramethylpiperidine

(Polymerizing UV-Absorbing Monomers)

b-1:2-hydroxy-4-(3-methacryloyloxy-2-hydroxypropoxy)benzophenone
b-2:2-[2'-hydroxy-5'-(methacryloyloxyethyl)phenyl]-2H-benzotriazole
b-3:2-[2'-hydroxy-5'-(B-methacryloyloxyethoxy)-3'-t-butylphenyl]-4-t-butyl-2H-benzotriazole

(Cycloalkyl (Meth)acrylates)

c-1: cyclohexyl methacrylate
c-2: t-butylcyclohexyl methacrylate

(Hydroxyl Group-Having Polymerizing Unsaturated Monomers)

d-1: hydroxypropyl acrylate
d-2: hydroxyethyl methacrylate

(Other Polymerizing Unsaturated Monomers)

e-1: n-butyl methacrylate
e-2: n-butyl acrylate
e-3: 2-ethylhexyl acrylate
e-4: methyl methacrylate
e-5: ethyl acrylate
e-6: methacrylic acid
e-7: itaconic acid
e-8: p-toluenesulfonic acid

[Table 1]

Table 1-1

| | | | Examples | | | | | | | | | | | |
|---|---|---|---|---|---|---|---|---|---|---|---|---|---|---|
| | | | 1* | 2* | 3 | 4 | 5* | *6 | 7 | 8 | 9* | 10 | 11 | 12* |
| acrylic copolymer starting material | Polymerizing UV-Stabilizing Monomer | compound | a-1 | a-2 | a-2 | a-1 | a-1 | | a-1 | | a-1 | a-1 | a-3 | a-2 |
| | | part by mass | 5.0 | 5.0 | 2.0 | 3.0 | 0.5 | 0.0 | 1.0 | 0.0 | 3.0 | 2.0 | 2.0 | 2.0 |
| | Polymerizing UV-Absorbing Monomer | compound | | | b-1 | b-2 | | | b-2 | b-2 | b-3 | b-2 | b-3 | b-1 |
| | | part by mass | 0.0 | 0.0 | 4.0 | 1.0 | 0.0 | 0.0 | 0.5 | 30.0 | 50.0 | 35.0 | 20.0 | 4.0 |
| | Cycloalkyl (meth)acrylate | compound | c-1 | c-1 | c-1 | c-1 | c-1 | c-1 | c-1 | c-1 | | c-1 | c-1 | c-1 |
| | | part by mass | 40.0 | 30.0 | 30.0 | 40.0 | 30.0 | 30.0 | 30.0 | 30.0 | 0.0 | 30.0 | 50.0 | 30.0 |
| | | compound | | c-2 | c-2 | | | | | | | | | c-2 |
| | | part by mass | | 26.0 | 25.0 | | | | | | | | | 25.0 |
| | Hydroxyl Group-Having Polymerizing Unsaturated Monomer | compound | d-1 | d-2 | d-2 | d-2 | d-2 | d-2 | d-2 | d-2 | d-2 | d-2 | d-2 | |
| | | part by mass | 10.0 | 18.0 | 18.0 | 5.0 | 10.0 | 10.0 | 2.0 | 10.0 | 10.0 | 5.0 | 5.0 | |
| | Polymerizing Unsaturated Monomer | compound | e-1 | | | e-1 | e-1 | e-1 | e-1 | e-3 | e-3 | | | |
| | | part by mass | 20.0 | | | 20.0 | 20.0 | 20.0 | 26.0 | 30.0 | 32.0 | | | |
| | | compound | e-2 | e-2 | e-2 | e-2 | e-2 | e-2 | e-2 | | e-4 | e-2 | e-2 | e-2 |
| | | part by mass | 24.0 | 20.0 | 20.0 | 30.5 | 39.0 | 39.5 | 40.0 | | 5.0 | 28.0 | 23.0 | 20.0 |
| | | compound | e-6 | e-6 | e-6 | e-6 | e-6 | e-6 | e-6 | | | | | e-6 |
| | | part by mass | 1.0 | 1.0 | 1.0 | 0.5 | 0.5 | 0.5 | 0.5 | 0.0 | 0.0 | 0.0 | 0.0 | 1.0 |
| Crosslinking Compound | | | epoxy | isocyanate | isocyanate | isocyanate | isocyanate | isocyanate | isocyanate | isocyanate | isocyanate | isocyanate | isocyanate | |

* not according to the invention

[Table 2]

Table 1-2

| | | | Comparative Examples 1 | Comparative Examples 2 | Comparative Examples 3 | Comparative Examples 4 | Comparative Examples 5 | Comparative Examples 6 |
|---|---|---|---|---|---|---|---|---|
| acrylic copolymer starting material | Polymerizing UV-Stabilizing Monomer | compound | | | | | | |
| | | part by mass | | | | | | |
| | Polymerizing UV-Absorbing Monomer | compound | | | | | | |
| | | part by mass | | | | | | |
| | Cycloalkyl (meth)acrylate | compound | | | | | c-1 | |
| | | part by mass | | | | | 30.0 | |
| | Hydroxyl Group-Having Polymerizing Unsaturated Monomer | compound | | | | d-2 | d-2 | |
| | | part by mass | | | | 19.0 | 5.0 | |
| | Polymerizing Unsaturated Monomer | compound | | | | e-1 | | e-4 |
| | | part by mass | | | | 40.0 | | 32.2 |
| | | compound | | | | e-2 | e-2 | e-5 |
| | | part by mass | | | | 40.0 | 28.0 | 32.7 |
| | | compound | | | | e-6 | | e-7 |
| | | part by mass | | | | 1.0 | | 10.3 |
| | | compound | | | | | | e-8 |
| | | part by mass | | | | | | 24.7 |
| Other Resin | | | saturated polyester | acrylic copolymer | acrylic resin + polyester | | HALS+ UVA | |
| Crosslinking Compound | | | isocyanate | isocyanate | | isocyanate | isocyanate | melamine |

[Table 3]

Table 2-1

| | Example | | | | | | | | | | | | | |
|---|---|---|---|---|---|---|---|---|---|---|---|---|---|---|
| | 1* | 2* | 3 | 4 | 5* | 6* | 7 | 8 | 9* | 10 | 11 | 12* | 13 | 14 |
| Delamination Strength (g/15 mm) | | | | | | | | | | | | | | |
| Laminate before test | 450 | 500 | 550 | 550 | 530 | 480 | 550 | 500 | 480 | 550 | 520 | 400 | 500 | 560 |
| Laminate after test at 60°C, 90% RH, 30 days | 430 | 490 | 550 | 550 | 530 | 450 | 500 | 530 | 400 | 540 | 520 | 350 | 350 | 550 |
| Laminate after test at 85°C, 85% RH, 30 days | 400 | 430 | 450 | 460 | 430 | 430 | 420 | 400 | 370 | 450 | 460 | 300 | 200 | 480 |
| Laminate after lightfastness test | 330 | 350 | 400 | 380 | 320 | 300 | 370 | 350 | 380 | 430 | 420 | 350 | 300 | 450 |
| Water Vapor Permeability ($g/m^2/day$) | | | | | | | | | | | | | | |
| Laminate before test | 0.1 | 0.1 | 0.1 | 0.1 | 0.1 | 0.1 | 0.1 | 0.1 | 0.1 | 0.1 | 0.1 | 0.2 | 0.1 | <0.1 |
| Laminate after test at 60°C, 90% RH, 30 days | 0.1 | 0.1 | 0.1 | 0.1 | 0.1 | 0.1 | 0.1 | 0.1 | 0.1 | 0.1 | 0.1 | 0.2 | 0.1 | <0.1 |
| Laminate after test at 85°C, 85% RH, 30 days | 0.2 | 0.1 | 0.1 | 0.1 | 0.1 | 0.1 | 0.1 | 0.1 | 0.2 | 0.1 | 0.1 | 0.4 | 0.1 | 0.1 |
| Laminate after lightfastness test | 0.3 | 0.2 | 0.1 | 0.1 | 0.2 | 0.3 | 0.1 | 0.1 | 0.3 | 0.1 | 0.1 | 0.4 | 0.1 | <0.1 |

* not according to the invention

[Table 4]

Table 2-2

| | Comparative Example | | | | | |
|---|---|---|---|---|---|---|
| | 1 | 2 | 3 | 4 | 5 | 6 |
| Delamination Strength (g/15 mm) | | | | | | |
| Laminate before test | 560 | 550 | 400 | 500 | 280 | 410 |
| Laminate after test at 60°C, 90% RH, 30 days | *1 | 400 | *1 | *1 | 220 | *1 |
| Laminate after test at 85°C, 85% RH, 30 days | *1 | 350 | *1 | *1 | 200 | *1 |
| Laminate after lightfastness test | *1 | *1 | *1 | *1 | *1 | *1 |
| Water Vapor Permeability (g/m$^2$/day) | | | | | | |
| Laminate before test | 0.1 | 0.1 | 0.5 | 0.1 | 0.3 | 0.9 |
| Laminate after test at 60°C, 90% RH, 30 days | *1 | 19 | *1 | *1 | 28 | *1 |
| Laminate after test at 85°C, 85% RH, 30 days | *1 | 33 | *1 | *1 | 45 | *1 |
| Laminate after lightfastness test | >1 | >1 | >1 | >1 | >1 | >1 |
| *1: Delaminated between substrate film/inorganic thin film. | | | | | | |

Example 15:

A biaxially-oriented polyethylene naphthalate film (Teijin DuPont's "Q51C12") having a thickness of 12 μm was used as the substrate film; and a coating liquid mentioned below was applied onto the corona-treated surface thereof, and dried to form thereon a coating layer having a thickness of 0.1 μm.

Next, using a vacuum evaporation apparatus, SiO was evaporated in vacuum at $1.33 \times 10^{-3}$ Pa ($1 \times 10^{-5}$ Torr) according to a high-frequency heating system, thereby forming a thin film of SiOx (x = 1.7) having a thickness of 20 nm on the coating layer to produce a gas barrier film.

Coating Liquid

A polycaprolactonediol, Daicel Chemical Industry's "Placcel 205", and an epoxy resin, Nagase Chemtec's "Denacol EX252" were mixed so that the equivalent ratio of the epoxy group to the hydroxyl group could be 1/2.

Example 16:

A gas barrier film was produced in the same manner as in Example 15, for which, however, the coating liquid was changed to the following.

A polycaprolactonediol, Daicel Chemical Industry's "Placcel 220", and an isocyanate resin, Sumitomo Bayer Urethane's "Sumidur N-3200" were mixed so that the equivalent ratio of the isocyanate group to the hydroxyl group could be 1/1.

Example 17:

A gas barrier film was produced in the same manner as in Example 15, for which, however, the coating liquid was changed to the following.

A polycarbonate-diol, Nippon Polyurethane's "Nippolan 982R", and an isocyanate resin, Nippon Polyurethane's "Coronate L" were mixed so that the equivalent ratio of the isocyanate group to the hydroxyl group could be 1/1.

Example 18:

A gas barrier film was produced in the same manner as in Example 15, for which, however, the coating liquid was changed to the following.

A polycarbonate-diol, Daicel Chemical Industry's "Placcel CD CD210", and an isocyanate resin, Mitsui Chemical Polyurethane's "Takenate D-170HN" were mixed so that the equivalent ratio of the isocyanate group to the hydroxyl

group could be 1/1.

Example 19:

An aqueous solution of an ammonium salt of a copolymer of methacrylic acid and butyl methacrylate (ratio by mass, 25/75) was applied onto the inorganic thin film surface of the gas barrier film of Example 16, and dried to form thereon a protective film having a thickness of 0.3 μm.

Example 20:

Using a plasma CVD apparatus, a plasma CVD film of thin SiOxNy (x = 1.6, y = 0.2) having a thickness of 20 nm was formed on the inorganic thin film surface of the gas barrier film of Example 16. For this, tetraethoxysilane was used as the starting material; oxygen, nitrogen and argon were used as the reaction gas; a plasma of 1 kW was applied in vacuum of 10.7 Pa ($8 \times 10^{-2}$ Torr) from a 13.56 MHz high-frequency discharge plasma source. Next, a vacuum evaporation film was formed on the plasma CVD film in the same manner as in Example 15, thereby producing a three-layered inorganic thin film gas barrier film.

Comparative Example 7:

A gas barrier film was produced in the same manner as in Example 15, for which, however, the coating liquid was changed to the following.

An adipate-type polyester polyol, Adeka's "Adeka New Ace Y4-5", and an isocyanate resin, Sumitomo Bayer Urethane's "Sumidur N-3200" were mixed so that the equivalent ratio of the isocyanate group to the hydroxyl group could be 1/2.

Comparative Example 8:

A gas barrier film was produced in the same manner as in Example 15, for which, however, the coating liquid was changed to the following.

A polyether polyol, Sumitomo Bayer Urethane's "Desmophen 550U", and an isocyanate resin, Sumitomo Bayer Urethane's "Sumidur N-3200" were mixed so that the equivalent ratio of the isocyanate group to the hydroxyl group could be 1/2.

Thus obtained, the gas barrier films were tested according to the methods mentioned in the above for the water vapor permeability before and after the lightfastness test, and for the delamination strength before and after the high-temperature high-humidity test and the lightfastness test. The results are shown in Table 3.

[Table 5]

Table 3

| | Example | | | | | | Comparative Example | |
|---|---|---|---|---|---|---|---|---|
| | 15 | 16 | 17 | 18 | 19 | 20 | 7 | 8 |
| Weather-Resistant Layer | polycaprol actone diol + epoxy | polycaprol actone diol + isocyanate | polycarbon ate diol + isocyanate | polycarbon ate diol + isocyanate | polycaprol diol + isocyanate | polycaprol actone diol + isocyanate | adipic acid polyester polyol + isocyanate | polyether polyol + isocyanate |
| Delamination Strength (g/15 mm) | | | | | | | | |
| Laminate before test | 450 | 480 | 460 | 480 | 450 | 500 | 550 | 400 |
| Laminate after test at 60°C, 90% RH, 30 days | 360 | 380 | 360 | 380 | 350 | 400 | *1 | 360 |
| Laminate after test at 85°C, 85% RH, 30 days | 330 | 330 | 300 | 300 | 200 | 350 | *1 | 350 |
| Laminate after lightfastness test | 300 | 300 | 300 | 300 | 280 | 330 | *1 | *1 |
| Water Vapor Permeability ($g/m^2/day$) | | | | | | | | |
| Laminate before test | 0.2 | 0.2 | 0.3 | 0.3 | 0.1 | 0.1 | 0.2 | 0.8 |
| Laminate after test at 60°C, 90% RH, 30 days | 0.3 | 0.3 | 0.4 | 0.5 | 0.2 | 0.2 | *1 | 25 |
| Laminate after test at 85°C, 85% RH, 30 days | 0.5 | 0.5 | 0.6 | 0.7 | 0.4 | 0.4 | *1 | 40 |
| Laminate after lightfastness test | 0.3 | 0.2 | 0.4 | 0.3 | 0.1 | 0.1 | >1 | >1 |

*1: Delaminated between substrate film/inorganic thin film.

Example 21:

A biaxially-oriented polyethylene naphthalate film (Teijin DuPont's "Q51C12") having a thickness of 12 μm was used as the substrate film; and a coating liquid mentioned below was applied onto the corona-treated surface thereof, and dried to form thereon a coating layer having a thickness of 0.1 μm.

Next, using a vacuum evaporation apparatus, SiO was evaporated in vacuum at $1.33 \times 10^{-3}$ Pa ($1 \times 10^{-5}$ Torr) according to a high-frequency heating system, thereby forming a thin film of SiOx (x = 1.7) having a thickness of 20 nm on the coating layer to produce a gas barrier film.

Coating Liquid

A polyvinyl butyral resin, Sekisui Chemical Industry's "Eslec BL-1" (having a degree of butyralization of 63 ± 3 mol%), and an epoxy resin serving as a crosslinking agent, Nagase Chemtex's "Denacol EX252" were mixed so that the equivalent ratio of the epoxy group to the hydroxyl group could be 1/1.

Example 22:

A gas barrier film was produced in the same manner as in Example 21, for which, however, the coating liquid was changed to the following.

In place of the polyvinyl butyral resin used in Example 21, a resin prepared in the manner mentioned below was used here. 250 g of a polyvinyl alcohol resin, Kuraray's "Poval PVA-117" (having a degree of saponification of from 98.0 to 99.0 mol% and a degree of polymerization of 1700) was added to 2400 g of ion-exchanged water and dissolved therein under heat to prepare an aqueous solution. 18 g of 35% hydrochloric acid was added to it, and with stirring at 15°C, 140 g of butyl aldehyde was dropwise added thereto, and the resin particles were precipitated. Next, with stirring and with adding 150 g of 35% hydrochloric acid thereto, this was heated up to 50°C and kept as such for 2 hours. Subsequently, the liquid was cooled, neutralized with sodium hydrogencarbonate, washed with water and dried to give a polyvinyl butyral resin powder (having a degree of butyralization of 70 mol%, and a remaining isotactic triad-type hydroxyl group content of 0.1 mol%).

An isocyanate resin serving as a crosslinking agent (Sumitomo Bayer Urethane's "Sumidur N-3200") was mixed with it so that the equivalent ratio of the isocyanate group to the hydroxyl group could be 1/1.

Example 23:

A gas barrier film was produced in the same manner as in Example 21, for which, however, the coating liquid was changed to the following.

A polyvinyl acetal resin, Sekisui Chemical Industry's "KS-3" (having a degree of acetalization of 74 ± 3 mol%) was mixed with a melamine resin serving as a crosslinking agent, Mitsui Chemical's "Uban 225" so that the equivalent ratio of the melamine group to the hydroxyl group could be 1/1.

Example 24:

A gas barrier film was produced in the same manner as in Example 21, for which, however, the coating liquid was changed to the following.

A polyvinyl acetacetal resin prepared in the manner mentioned below was used here. 220 g of a polyvinyl alcohol resin, Nippon Gohsei's "Gosenol" (having a degree of saponification of from 97.0 to 98.8 mol% and a degree of polymerization of 2400) was added to 2810 g of ion-exchanged water and dissolved therein under heat to prepare an aqueous solution. 645 g of 35% hydrochloric acid was added to it with stirring at 20°C. Next, at 10°C, 3.6 g of butyl aldehyde was added thereto with stirring, and after 5 minutes, 143 g of acetaldehyde was dropwise added thereto with stirring, and the resin particles were precipitated. Next, this was kept at 60°C for 2 hours, then the liquid was cooled, neutralized with sodium hydrogencarbonate, washed with water, and dried to give a polyvinyl acetacetal resin powder (having a degree of acetalization of 75 mol%).

An isocyanate resin serving as a crosslinking agent (Sumitomo Bayer Urethane's "Sumidur N-3200") was mixed with it so that the equivalent ratio of the isocyanate group to the hydroxyl group could be 1/1.

Example 25:

An aqueous solution of an ammonium salt of a copolymer of methacrylic acid and butyl methacrylate (ratio by mass, 25/75) was applied onto the inorganic thin film surface of the gas barrier film of Example 22, and dried to form

thereon a protective film having a thickness of 0.3 μm.

Example 26:

Using a plasma CVD apparatus, a plasma CVD film of thin SiOxNy (x = 1.6, y = 0.2) having a thickness of 20 nm was formed on the inorganic thin film surface of the gas barrier film of Example 22. For this, tetraethoxysilane was used as the starting material; oxygen, nitrogen and argon were used as the reaction gas; a plasma of 1 kW was applied in vacuum of 10.7 Pa ($8 \times 10^{-2}$ Torr) from a 13.56 MHz high-frequency discharge plasma source. Next, a vacuum evaporation film was formed on the plasma CVD film in the same manner as in Example 21, thereby producing a three-layered inorganic thin film gas barrier film.

Comparative Example 9:

A gas barrier film was produced in the same manner as in Example 21, for which, however, the coating liquid was changed to the following.

As the coating liquid, used was a polyvinyl butyral resin, Sekisui Chemical Industry's "Eslec BL-1" (having a degree of butyralization of 63 ± 3 mol%).

Thus obtained, the gas barrier films were tested according to the methods mentioned in the above for the water vapor permeability before and after the lightfastness test, and for the delamination strength before and after the high-temperature high-humidity test and the lightfastness test. The results are shown in Table 4.

[Table 6]

Table 4

| | Example | | | | | | Comparative Example |
|---|---|---|---|---|---|---|---|
| | 21 | 22 | 23 | 24 | 25 | 26 | 9 |
| Weather-Resistant Layer | polyvinyl butyral + epoxy | polyvinyl butyral + isocyanate | polyvinyl acetacetal + melamine | polyvinyl acetacetal + isocyanate | polyvinyl butyral + isocyanate | polyvinyl butyral + isocyanate | polyvinyl butyral |
| Delamination Strength (g/15 mm) | | | | | | | |
| Laminate before test | 580 | 600 | 550 | 600 | 550 | 600 | 450 |
| Laminate after test at 60°C, 90% RH, 30 days | 480 | 500 | 450 | 500 | 400 | 540 | 300 |
| Laminate after test at 85°C, 85% RH, 30 days | 400 | 430 | 380 | 450 | 200 | 450 | 170 |
| Laminate after lightfastness test | 380 | 400 | 350 | 400 | 300 | 430 | 50 |
| Water Vapor Permeability ($g/m^2/day$) | | | | | | | |
| Laminate before test | 0.1 | 0.1 | 0.1 | 0.1 | 0.1 | <0.1 | 0.5 |
| Laminate after test at 60°C, 90% RH, 30 days | 0.2 | 0.1 | 0.1 | 0.1 | 0.1 | <0.1 | 13 |
| Laminate after test at 85°C, 85% RH, 30 days | 0.3 | 0.2 | 0.2 | 0.1 | 0.2 | 0.1 | 23 |
| Laminate after lightfastness test | 0.2 | 0.1 | 0.2 | 0.1 | 0.1 | <0.1 | >1 |

[Industrial Applicability]

The gas-barrier film of the present invention is extensively used in packaging applications in which products to be packaged are required to be shielded from various gases such as water vapor and oxygen, for example, for packaging foods, industrial products, medicines or drugs, to prevent deterioration thereof. Apart from for such packing applications, in addition, the gas-barrier film is also usable as a transparent conductive sheet or a vacuum heat-insulating material for use in organic devices such as liquid-crystal display devices, organic EL devices, organic TFT, organic semiconductor sensors, organic light-emitting devices, and in solar cells, electromagnetic shields, touch panels, electronic papers, film capacitors, inorganic EL devices, or color filters.

## Claims

1. A gas barrier film comprising a substrate film, a weather-resistant coating layer formed on at least one surface thereof, and an inorganic thin film layer formed on the surface of the coating layer,
wherein the weather-resistant coating layer is selected from:

    (1) a weather-resistant coating layer formed by crosslinking an acrylic copolymer having a UV-absorbing group, a cycloalkyl group and a crosslinking functional group, with a crosslinking compound,
    (2) a weather-resistant coating layer formed by crosslinking a polycaprolactone-polyol and/or a polycarbonate-polyol having a terminal hydroxyl index of from 92.5 to 98.5 with an isocyanate compound and/or an epoxy compound, the terminal hydroxyl index being the ratio (%) of the peak area of polyol to the sum total of the peak area of monoalcohol and polyol as analyzed by gas chromatography, which is performed by heating from 40 °C up to 220°C at 10°C/min, keeping as such for 15 minutes, and analyzing with a hydrogen flame ionization detector, and
    (3) a weather-resistant coating layer formed by crosslinking polyvinyl butyral having a degree of butyralization of from 50 to 80 mol% and an isotactic triad-type residual hydroxyl group content of at most 1 mol% and/or polyvinyl acetal having a degree of acetalization of from 50 to 80 mol% with with an isocyanate compound and/or an epoxy compound.

2. The gas barrier film as claimed in claim 1, wherein the UV-absorbing group in the weather-resistant coating layer (1) is a benzotriazole group and/or a benzophenone group.

3. The gas barrier film as claimed in claim 1, wherein the acrylic copolymer in the weather-resistant coating layer (1) furthermore has a UV-stabilizing group.

4. The gas barrier film as claimed in claim 3, wherein the weather-resistant coating layer (1) is one formed by reacting an acrylic copolymer having a hindered amine group as the UV-stabilizing group, a benzotriazole group and/or a benzophenone group as the UV-absorbing group, and a cycloalkyl group, and having a hydroxyl group as the crosslinking functional group,
with an isocyanate compound.

5. The gas barrier film as claimed in claim 1, wherein the acrylic copolymer in the weather-resistant coating layer (1) is one produced through copolymerization with a polymerizing UV-absorbing monomer and a cycloalkyl (meth)acrylate.

6. The gas barrier film as claimed in claim 1, wherein the inorganic thin film layer comprises an inorganic oxide.

7. The gas barrier film as claimed in claim 1, wherein the inorganic thin film layer is composed of at least two inorganic thin film layers.

8. The gas barrier film as claimed in claim 1, wherein the substrate film is a biaxially-oriented film containing polyethylene naphthalate.

9. A method for producing a gas barrier film comprising forming a weather-resistant coating layer on at least one surface of a substrate film followed by forming an inorganic thin film on the surface of the coating layer, wherein the weather-resistant coating layer is formed by crosslinking an acrylic copolymer with a crosslinking compound where the acrylic copolymer is produced through copolymerization with a polymerizing UV-absorbing monomer, a cycloalkyl

(meth)acrylate and a crosslinking functional group-having polymerizing unsaturated monomer.

10. A method for enhancing the weather resistance of a gas barrier film comprising a substrate film, a coating layer formed on at least one surface thereof, and an inorganic thin film formed on the surface of the coating layer, wherein the coating layer is formed by crosslinking an acrylic copolymer having a UV-absorbing group, a cycloalkyl group and a crosslinking functional group, with a crosslinking compound.

## Patentansprüche

1. Eine Gassperrfolie, die eine Substratfolie, eine auf mindestens einer Oberfläche davon gebildete wetterfeste Deckschicht, und eine auf der Oberfläche der Deckschicht gebildete anorganische dünne Filmschicht umfasst, wobei die wetterfeste Deckschicht ausgewählt ist aus:

    (1) einer durch Quervernetzung eines Acrylcopolymers, das eine UV-absorbierende Gruppe, eine Cycloalkylgruppe und eine quervernetzende funktionelle Gruppe aufweist, mit einer quervernetzenden Verbindung gebildeten wetterfesten Deckschicht,
    (2) einer durch Quervernetzung eines Polycaprolacton-Polyols und/oder eines Polycarbonat-Polyols mit einem terminalen Hydroxylindex von 92,5 bis 98,5 mit einer Isocyanatverbindung und/oder einer Epoxyverbindung gebildeten wetterfesten Deckschicht, wobei der terminale Hydroxylindex der Anteil (%) der Peak-Fläche des Polyols an der Gesamtsumme der Peak-Fläche des Monoalkohols und des Polyols wie analysiert durch Gaschromatographie, die durch Aufheizen von 40 °C bis auf 220 °C bei 10 °C/min, dabei für 15 Minuten verbleiben, und Analysieren mit einem Wasserstoff-Flammenionisationsdetektor durchgeführt wird, ist, und
    (3) einer durch Quervernetzung von Polyvinylbutyral mit einem Grad der Butyralisierung von 50 bis 80 mol-% und einem Restgehalt von Hydroxylgruppen der Art isotaktischer Triaden von höchstens 1 mol-% und/oder von Polyvinylacetal mit einem Grad der Acetalisierung von 50 bis 80 mol-% mit einer Isocyanatverbindung und/oder einer Epoxyverbindung gebildeten wetterfesten Deckschicht.

2. Die Gassperrfolie wie in Anspruch 1 beansprucht, wobei es sich bei der UV-absorbierenden Gruppe in der wetterfesten Deckschicht (1) um eine Benzotriazolgruppe und/oder eine Benzophenongruppe handelt.

3. Die Gassperrfolie wie in Anspruch 1 beansprucht, wobei das Acrylcopolymer in der wetterfesten Deckschicht (1) darüber hinaus eine UV-stabilisierende Gruppe aufweist.

4. Die Gassperrfolie wie in Anspruch 3 beansprucht, wobei die wetterfeste Deckschicht (1) eine ist, die durch das zur Reaktion Bringen eines Acrylcopolymers, das ein gehindertes Amin als die UV-stabilisierende Gruppe, eine Benzotriazolgruppe und/oder eine Benzophenongruppe als die UV-absorbierende Gruppe, und eine Cycloalkylgruppe aufweist, und über eine Hydroxylgruppe als die quervernetzende funktionelle Gruppe verfügt, mit einer Isocyanatverbindung gebildet wird.

5. Die Gassperrfolie wie in Anspruch 1 beansprucht, wobei das Acrylcopolymer in der wetterfesten Deckschicht (1) eines ist, das durch Copolymerisation mit einem polymerisierenden UV-absorbierenden Monomer und einem Cycloalkyl(meth)acrylat hergestellt wird.

6. Die Gassperrfolie wie in Anspruch 1 beansprucht, wobei die anorganische dünne Filmschicht ein anorganisches Oxid umfasst.

7. Die Gassperrfolie wie in Anspruch 1 beansprucht, wobei die anorganische dünne Filmschicht aus mindestens zwei anorganischen dünnen Filmschichten zusammengesetzt ist.

8. Die Gassperrfolie wie in Anspruch 1 beansprucht, wobei es sich bei der Substratfolie um eine biaxial orientierte Folie, die Polyethylennaphthalat enthält, handelt.

9. Ein Verfahren zur Herstellung einer Gassperrfolie, die das Bilden einer wetterfesten Deckschicht auf mindestens einer Oberfläche einer Substratfolie, gefolgt von der Bildung eines anorganischen dünnen Films auf der Oberfläche der Deckschicht, wobei die wetterfeste Deckschicht durch das Quervernetzen eines Acrylcopolymers mit einer Quervernetzungsverbindung gebildet wird, wobei das Acrylcopolymer durch Copolymerisation mit einem polymerisierenden UV-absorbierenden Monomer, einem Cycloalkyl(meth)acrylat und einem polymerisierenden ungesättigten Monomer, das eine quervernetzende funktionelle Gruppe aufweist, hergestellt wird, umfasst.

**10.** Ein Verfahren zur Verbesserung der Wetterfestigkeit einer Gassperrfolie, die eine Substratfolie, eine auf mindestens einer Oberfläche davon gebildete Deckschicht, und einen auf der Oberfläche der Deckschicht gebildeten anorganischen dünnen Film umfasst, wobei die Deckschicht durch das Quervernetzen eines Acrylcopolymers, das eine UV-absorbierende Gruppe, eine Cycloalkylgruppe und eine quervernetzende funktionelle Gruppe aufweist, mit einer Quervernetzungsverbindung gebildet wird.

## Revendications

**1.** Film barrière aux gaz comprenant un film de substrat, une couche de revêtement résistant aux intempéries formée sur au moins une surface de celui-ci, et une couche de film mince inorganique formée sur la surface de la couche de revêtement,
dans lequel la couche de revêtement résistant aux intempéries est choisie parmi :

(1) une couche de revêtement résistant aux intempéries formée par réticulation d'un copolymère acrylique ayant un groupe absorbant les UV, un groupe cycloalkyle et un groupe fonctionnel de réticulation, avec un composé de réticulation,
(2) une couche de revêtement résistant aux intempéries formée par réticulation d'un polycaprolactone-polyol et/ou d'un polycarbonate-polyol ayant un indice d'hydroxyle terminal de 92,5 à 98,5 avec un composé isocyanate et/ou un composé époxy, l'indice d'hydroxyle terminal étant le rapport (%) de la surface du pic du polyol sur la somme totale de la surface du pic du monoalcool et du polyol comme analysé par chromatographie gazeuse, qui est réalisée par chauffage de 40 °C à 220 °C à 10 °C/min, en gardant tel quel pendant 15 minutes, et analyse avec un détecteur d'ionisation à flamme d'hydrogène, et
(3) une couche de revêtement résistant aux intempéries formée par réticulation de butyral polyvinylique ayant un degré de butyralisation de 50 à 80 % en moles et une teneur en groupe hydroxyle résiduel de type triade isotactique d'au plus 1 % en moles et/ou d'acétal polyvinylique ayant un degré d'acétalisation de 50 à 80 % en moles avec un composé isocyanate et/ou un composé époxy.

**2.** Film barrière aux gaz selon la revendication 1, dans lequel le groupe absorbant les UV dans la couche de revêtement résistant aux intempéries (1) est un groupe benzotriazole et/ou un groupe benzophénone.

**3.** Film barrière aux gaz selon la revendication 1, dans lequel le copolymère acrylique dans la couche de revêtement résistant aux intempéries (1) a en outre un groupe stabilisant les UV.

**4.** Film barrière aux gaz selon la revendication 3, dans lequel la couche de revêtement résistant aux intempéries (1) est une couche formée par réaction d'un copolymère acrylique ayant un groupe amine encombré en tant que groupe stabilisant les UV, un groupe benzotriazole et/ou un groupe benzophénone en tant que groupe absorbant les UV, et un groupe cycloalkyle, et ayant un groupe hydroxyle en tant que groupe fonctionnel de réticulation, avec un composé isocyanate.

**5.** Film barrière aux gaz selon la revendication 1, dans lequel le copolymère acrylique dans la couche de revêtement résistant aux intempéries (1) est un copolymère produit par copolymérisation avec un monomère absorbant les UV de polymérisation et un (méth)acrylate de cycloalkyle.

**6.** Film barrière aux gaz selon la revendication 1, dans lequel la couche de film mince inorganique comprend un oxyde inorganique.

**7.** Film barrière aux gaz selon la revendication 1, dans lequel la couche de film mince inorganique se compose d'au moins deux couches de film mince inorganique.

**8.** Film barrière aux gaz selon la revendication 1, dans lequel le film de substrat est un film orienté de manière biaxiale contenant du naphtalate de polyéthylène.

**9.** Procédé de production d'un film barrière aux gaz comprenant la formation d'une couche de revêtement résistant aux intempéries sur au moins une surface d'un film de substrat suivie par la formation d'un film mince organique sur la surface de la couche de revêtement, dans lequel la couche de revêtement résistant aux intempéries est

formée par réticulation d'un composé acrylique avec un composé de réticulation où le copolymère acrylique est produit par copolymérisation avec un monomère absorbant les UV de polymérisation, un (méth)acrylate de cycloalkyle et un monomère insaturé de polymérisation ayant un groupe fonctionnel de réticulation.

**10.** Procédé d'amélioration de la résistance aux intempéries d'un film barrière aux gaz comprenant un film de substrat, une couche de revêtement formée sur au moins une surface de celui-ci, et un film mince inorganique formé sur la surface de la couche de revêtement, dans lequel la couche de revêtement est formée par réticulation d'un copolymère acrylique ayant un groupe absorbant les UV, un groupe cycloalkyle et un groupe fonctionnel de réticulation, avec un composé de réticulation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007030341 A
- JP 2001310412 A
- JP 10329291 A
- JP 10100331 A
- JP 2002026343 A
- JP 2005144719 A
- JP 2005521193 T
- JP 2002187233 A
- JP 2002331619 A
- JP 2006255928 A
- JP 2007331187 A
- JP 2003277675 A
- JP 63132980 A
- WO 2007040039 A
- EP 1930953 A
- EP 0709442 A
- JP 2006068992 A

### Non-patent literature cited in the description

- Placcel 200'' series, Union Carbide's ''TONE. *Daicel Chemical Industry's*